(19) **Europäisches Patentamt**

**European Patent Office**

**Office européen des brevets**

(11) Veröffentlichungsnummer: **0 379 927**

**A2**

(12) **EUROPÄISCHE PATENTANMELDUNG**

(21) Anmeldenummer: **90100779.9**

(22) Anmeldetag: **16.01.90**

(51) Int. Cl.⁵: **B65D 33/25, B65B 9/04**

(30) Priorität: **27.01.89 US 303580**

(43) Veröffentlichungstag der Anmeldung:
**01.08.90 Patentblatt 90/31**

(84) Benannte Vertragsstaaten:
**AT BE CH DE DK ES FR GB GR IT LI LU NL SE**

(71) Anmelder: **Krämer & Grebe GmbH & Co. KG Maschinenfabrik Im Ruttert D-3560 Biedenkopf-Wallau(DE)**

Anmelder: **T.W. KUTTER, INC.**

**91 Wales Avenue Avon Massachusetts 02322(US)**

(72) Erfinder: **Schwarz, Gunther 119 Mallard Crescent Waterloo, Ontario N2V 1E3(CA)** Erfinder: **Merrill, Ronald E. 32 Summer Street Cohasset, Massachusetts 02025(US)**

(74) Vertreter: **Missling, Arne, Dipl.-Ing. Patentanwalt Bismarckstrasse 43 D-6300 Giessen(DE)**

(54) **Wiederverschliessbare Verpackung sowie Verfahren und Vorrichtung zu deren Herstellung.**

㊲

1. Die Erfindung bezieht sich auf eine wiederverschließbare Verpackung, welche ein reißverschlußartiges Material verwendet, sowie auf ein Verfahren und eine Vorrichtung zu deren Herstellung. Bei der Verpackung enden die Streifen des reißverschlußartigen Materials (9) vollständig innerhalb des äußeren Umfangs des Siegelbereiches (6). Die Verpackung ist durch Ausbilden einer seitlichen Schleife (13) in einem ersten Flächenteil (4) hergestellt, sowie durch Anordnung des reißverschlußartigen Materials (9) längs des Flächenteiles (4) unter Kreuzung der Schleife (13) in einem im wesentlichen rechten Winkel, sowie durch Schneiden des reißverschlußartigen Materials (9) in dem Bereich der Schleife (13) und durch Geradeziehen des ersten Flächenteiles (4), um einen Spalt zwischen den abgeschnittenen Enden des Reißverschlußmaterials (9) auszubilden. Nachfolgend wird das zweite Flächenteil (2) mit dem ersten Flächenteil (4) zur Schaffung eines Bereichs zur Aufnahme eines Gegenstandes verbunden. Die Vorrichtung umfaßt Mittel zur Ausbildung der seitlichen Schleife (13) in Form eines Formbalkens (40), welcher in zumindest eine Nut eines Tisches, auf welchem sich das Flächenteil (4) befindet, bewegbar ist, sowie ein Schneidmesser (60), welches zum Zertrennen des reißverschlußartigen Materials (9)

ohne Zerschneiden des Flächenteiles (4) in die Nut der seitlichen Schleife (13) bewegbar ist, wobei bevorzugterweise der Längs-Abstand zwischen den Schleifen-Formstationen veränderbar ist.

FIG. 1

# Wiederverschließbare Verpackung sowie Verfahren und Vorrichtung zu deren Herstellung

Die Erfindung bezieht sich auf Vakuumverpackungen und Vakuumverpackungseinrichtungen und im speziellen auf eine wiederverschließbare Verpackungsanordnung und auf eine Vorrichtung zur Herstellung derselben. Derartige Verpackungen werden im speziellen für Nahrungsmittelprodukte verwendet, bei welchen die Verpackung evakuiert und hermetisch abgedichtet wird und bei welchen der Verbraucher die Verpackung nach einem Aufbrechen der hermetischen Dichtung wieder zu verschließen wünscht.

Viele Nahrungsmittel, wie etwa Schinken, hot dogs, Käse, Frühstücksfleisch o.ä werden in Vakuumverpackungen verkauft, welche aus flexiblen thermoplastischen Materialien gebildet sind. Die Verpackungen werden evakuiert und hermetisch abgedichtet und in einigen Fällen mit Gasen gefüllt, um die Frische der Produkte in der Verpackung zu konservieren. Der Verbraucher verbraucht jedoch häufig nicht sofort das gesamte Produkt und wünscht somit, die Verpackung wieder zu verschließen. Es ist unerwünscht, daß der Verbraucher das gesamte Produkt vollständig wiederverpackt, beispielsweise in eine Zellophanfolie, in eine Saran-(Warenzeichen)Verpakkung oder einen abdichtbaren Beutel. Deshalb zeigen viele aus dem Stand der Technik bekannte Verpackungsausgestaltungen wiederverschließbare Verpackungen.

Eine derartige Einrichtung umfaßt die Verwendung von wiederverschließbaren, reißverschlußähnlichen Verschlußstreifen an den beiden Innenflächen des Verpackungsmateriales. Diese Verschlußstreifen bestehen aus thermoplastischen Umbördelungen oder Leisten, welche zusammen mit den Verpackungsmaterialien extrudiert oder an diesen befestigt sind. Diese Leisten weisen ein miteinander versperrbares Profil auf. Es wurden eine Anzahl von Patenten für derartige Verpackungen ausgegeben, welche die oben kurz beschriebenen Möglichkeiten umfassen.

Beispielsweise wurden in der Vergangenheit die folgenden US-Patente ausgegeben, welche sich im allgemeinen auf wiederverschließbare Verpakkungen beziehen: es handelt sich um die Patent-Nummern 2,991,001; 3,473,589; 3,780,781; 3,815,317; 4,240,241; 4,246,288; 4,572,377; 4,437,293; 4,617,683; 4,698,954 und 4,782,951.

Die oben aufgeführte Liste umfaßt drei US-Patente, nämlich das Patent 4,240,241 und das Patent 4,437,293, welche ein Verfahren und eine Vorrichtung zur Herstellung einer wiederverschließbaren Verpackung beanspruchen. Das Patent 4,248, 288 beansprucht die wiederverschließbare Packung selbst. Die wiederverschließbare Verpakkung umfaßt eine äußere Umfangsdichtung und eine wiederverschließbare Dichtung an der Innenseite einer Kante der Verpackung. Es sind Eindrückungen ausgestanzt, um einen Bereich des Reißverschluß-Streifenmaterials in dem Bereich des abgedichteten Teiles zu entfernnen, so daß weiterhin ein zentrischer Materialstreifen verbleibt.

In der obigen Liste ist weiterhin das US-Patent 4,782,951 angeführt, welches eine wiederverschließbare Verpackung zeigt, die miteinander in Eingriff bringbare Verschlußstreifen aufweist, welche außerhalb der hermetischen Dichtung angebracht sind. Die hermetische Dichtung ist in einer Abzieh-Bauart ausgebildet, so daß die Verpackung bei deren Öffnung nicht zerstört wird.

Das Hauptproblem beim Stand der Technik, insbesondere bei den oben beschriebenen US-Patenten, besteht in der Dichtung durch einen wiederverschließbaren Verschluß oder Reißverschluß. Die Dichtung um die Reißverschluß-Streifen ist schwierig und es treten sehr häufig kleine Leckagen auf, insbesondere nachdem die Verpackung bei der Übergabe gehand habt wurde. Bei dem Patent 4,782,951 wird zur Lösung vorgeschlagen, den Reißverschluß außerhalb des Dichtungsbereiches anzuordnen. Obwohl dies in mancher Hinsicht vorteilhaft sein mag, bringt diese Lösung wiederum Probleme, insbesondere das Problem, daß die relativ teuere abziehbare Dichtung wesentlich ist. Bei den Patenten 4,240,241, 4,437,293 und 4, 246,288 besteht die Lösung darin, Eindrückungen auszustanzen, um etwas von dem Reißverschluß-Streifenmaterial zu entfernen, so daß, wie oben erwähnt, ein zentraler Streifen des Reißverschluß-Substrats verbleibt.

Es ist ein Ziel der vorliegenden Erfindung, eine verbesserte wiederverschließbare Verpackung zu schaffen, sowie ein Verfahren und eine Vorrichtung zu deren Herstellung, um die oben aufgeführten Probleme und Nachteile zu überwinden.

Erfindungsgemäß ist eine wiederverschließbare Verpackung vorgesehen, welche ein oberes und ein unteres flächiges Material aufweist, welche einen ein Produkt enthaltenden Bereich zwischen sich festlegen, wobei die Flächen beständig an dem Umfang des das Produkt enthaltenden Bereiches durch einen Umfangs-Dichtungsbereich fest miteinander versiegelt sind. Ein lösbarer reißverschlußartiger Verschluß ist an einer Kante des das Produkt enthaltenden Bereiches vorgesehen. Der reißverschlußartige Verschluß weist miteinander in Eingriff bringbare Verschlußstreifen auf, welche eine zu öffnende und wiederverschließbare Dichtung bilden, wobei die Verschlußstreifen innerhalb des äußeren Bereichs des Dichtungsbereiches enden, bevorzugterweise geringfügig innerhalb des Dichtungsbereiches.

Gemäß dem erfindungsgemäßen Verfahren wird die wiederverschließbare Verpackung dadurch ausgebildet, daß zuerst eine seitliche Schleife in einem ersten der Flächenteile ausgebildet wird, (üblicherweise in dem unteren Flächenteil), wobei das reißverschlußartige Material längs dem Flächenteil über die Schleife im wesentlichen in einem rechten Winkel angeordnet wird, und wobei nachfolgend das Reißverschlußma terial in dem Bereich der Schleife geschnitten wird. Nachfolgend wird das Flächenteil gerade ausgerichtet, wodurch ein diskontinuierlicher Bereich oder ein Spalt zwischen den geschnittenen Enden des Reißverschlußmateriales geschaffen wird. Nachfolgend erfolgt ein Verschweißen des zweiten Flächenteiles (üblicherweise des oberen Flächenteiles) mit dem ersten Flächenteil, um eine Verpackung mit einem abgedichteten Bereich in dem Spalt auszubilden und um bevorzugterweise die abgeschnittenen Enden der reißverschlußartigen Materialstreifen zu umschließen.

Bei der erfindungsgemäßen Vorrichtung sind Mittel zur Ausbildung einer seitlichen Schleife oder Schlinge in einem der Flächenteile vorgesehen, sowie Mittel zur Anbringung des wiederverschließbaren reißverschlußartigen Verschlußmaterials längs des Flächenteiles, welches die Schleife im wesentlichen in einem rechten Winkel kreuzt und Mittel zum Schneiden des reißverschlußartigen Materials in dem Bereich der Schleife, um auf diese Weise eine Unterbrechung oder einen Spalt in dem Reißverschlußmaterial zu erzeugen.

Bei den bevorzugten Ausführungsbeispielen der Vorrichtung umfassen die Mittel zur Ausbildung der seitlichen Schleife zumindest einen quer ausgerichteten Stab zur Ausbildung der Schleife, welcher in eine und aus einer zugeordneten Schleifenausbildungsnut oder mehreren Nuten in einem Tisch bewegbar ist, an welchem das untere Flächenteil in Längsrichtung bewegt wird.

In einem Ausführungsbeispiel der Vorrichtung ist ein Längs-Reißverschlußmaterial-Führungsschuh, auf welchen und entlang dessen das reißverschlußartige Material gefördert wird, geringfügig oberhalb des Tisches angeordnet. Unterhalb des Tisches und zu dem Führungsschuh ausgerichtet ist zumindest ein heizbarer Verbindungsstab vorgesehen, welcher durch Schlitze in dem Tisch bewegbar ist, um das Flächenteil-Material zwischen dem Verbindungsstab und der Unterseite des Führungsschuhes mit dem reißverschlußartigen Material zu verbinden. Weiterhin ist zumindest ein Schneidmesser oberhalb des Tisches teilweise in die Schleifen-Ausbildungsnut unterhalb des Führungsschuhes einführbar, um das reißverschlußartige Material ohne eine Durchtrennung des Flächenteil-Materials zu schneiden, wobei der Führungsschuh mit einem Spalt versehen ist, durch welchen das Messer bewegbar ist.

In einem alternativen Ausführungsbeispiel der Erfindung sind Klemmstäbe bewegbar, um das reißverschlußartige Material über die Schleife zu klemmen Dabei umfassen die Schneidemittel ein Schnittmesser, welches in dem Bereich der Schleife nach unten bewegbar ist. Weiterhin sind Dichtungsmittel vorgesehen, um einen Bereich des Reißverschlußmaterials an dem Flächenteil anzuheften. Die Schleifenausbildungsstäbe, die Klemmstäbe und das Schnittmesser sind in einer einzigen Anordnung gelagert, so daß eine Betätigung der Anordnung in Richtung auf das Flächenteil und das reißverschlußartige Material zuerst die Schleife ausbildet, daraufhin das reißverschlußartige Material mit dem Flächenteil verklemmt und daraufhin das reißverschlußartige Material schneidet.. Der Abstand zwischen den schleifenausbildenden Bereichen kann variiert werden.

Somit werden erfindungsgemäß die aus dem Stand der Technik bekannten Probleme einer Dichtung durch einen wiederverschließbaren Verschluß oder Reißverschluß vermieden, und zwar in diesem Falle durch ein Durchtrennen des reißverschlußartigen Materials, um einen Spalt zu erzeugen, so daß die reißverschlußartigen Materialstreifen kurz vor dem äusseren Umfang des Dichtungsbereiches enden. Diese Vorgehensweise hat den zusätzlichen Vorteil, daß üblicherweise 15 mm des Reißverschlußmaterials pro Verpackung einsparbar sind, so daß sich insgesamt eine erhebliche Kosteneinsparung ergibt.

Im folgenden wird die Erfindung anhand von Ausführungsbeispielen in Verbindung mit der Zeichnung beschrieben, wobei sich weitere Merkmale der Erfindung aus der detaillierten Beschreibung ergeben. Dabei zeigt:

Fig. 1 eine Draufsicht auf wiederverschließbare Vakuumverpackungen, welche erfindungsgemäß hergestellt wurden,

Fig. 2 eine schematische Darstellung einer typischen Vakuum-Verpackungseinrichtung, wobei die Anordnung des Reißverschluß-Aufbringungsgerätes gemäß der vorliegenden Erfindung dargestellt ist,

Fig. 3 eine Explosionsansicht der Reißverschluß-Aufbringungsvorrichtung,

Fig. 4a bis 4f Seitenansicht der Reißverschluß-Aufbringungsvorrichtung, wobei unterschiedliche Stufen in der Ausbildung der Verpackungen dargestellt sind,

Fig. 5a bis 5f Endansichten der Reißverschluß-Aufbringungsvorrichtung, entsprechend den Fig. 4a - 4f,

Fig. 6 eine Endansicht des Verpackungs-Dichtungsrahmens,

Fig. 7a bis 7e Seitenansicht eines weiteren Ausführungsbeispiels der Vorrichtung,

Fig. 8a bis 8e Endansichten des weiteren Ausführungsbeispiels der Vorrichtung, korrespondierend jeweils zu den Fig. 7a - 7e,

Fig. 9 eine Explosionsdarstellung eines Teils des weiteren Ausführungsbeispiels,

Fig. 10 eine Draufsicht auf eine wiederverschließbare Vakuumverpackung, welche mittels der Vorrichtung des weiteren Ausführungsbeispiels hergestellt ist, wo bei der angeheftete Dichtungsbereich hervorgehoben ist, und

Fig. 11 eine Endansicht, in welcher Reißverschluß-Dichtungsmittel in der Formstation des weiteren Ausführungsbeispiels dargestellt sind.

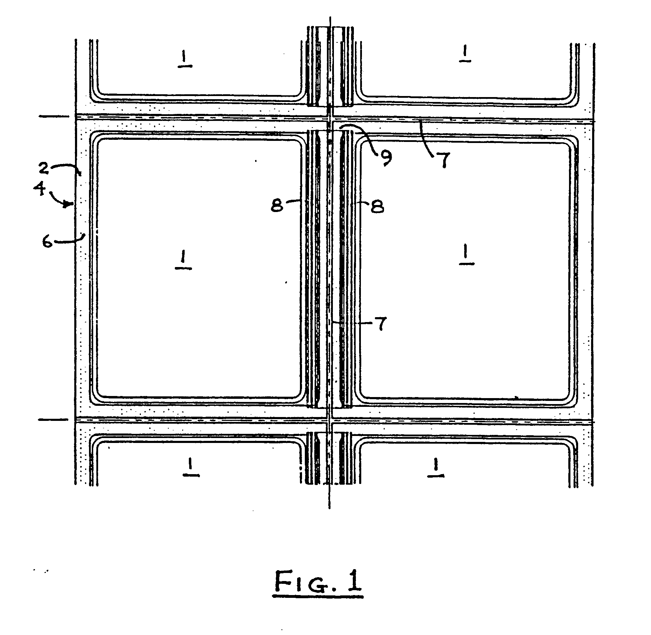

Die Fig. 1 zeigt eine wiederverschließbare Vakuumverpackung 1, welche gemäß der Erfindung hergestellt wurde. Die Verpackung umfaßt jeweils obere und untere Kunststoff-Flächenteile 2,4, welche an ihrem Umfang durch einen durchgehenden Dichtungsbereich 6 hermetisch abgedichtet sind. Die Verpackungen sind möglicherweise entlang von Schnittlinien 7 voneinander getrennt. Wiederverschließbare Reißverschlußstreifen 8 sind an einem Reißverschlußmaterial 9 vorgesehen und an der Innenseite des Dichtungsbereiches jeder Verpackung positioniert und erstrecken sich bevorzugterweise gerade von einem Dichtungsbereich an einer Kante der Verpackung zu einem Dichtungsbereich an der gegenüberliegenden Kante der Verpackung, in jedem Falle jedoch nicht vollständig durch den Dichtungsbereich.

Ganz allgemein kann jedes spezifische wiederverschließbare Reißverschlußmaterial, welches für Nahrungsmittelzwecke verwendbar ist, verwendet werden, so wie etwa fresh-trak-wiederverschließbare Reißverschlüsse, welche durch die Firma Presto Products Co. Appleton, Wisconsin, USA angeboten werden. Ein derartiges Reißverschlußmaterial weist üblicherweise miteinander in Eingriff bringbare Kunststoff-Streifen von unterschiedlichen Ausgestaltungen auf und wird in Rollen angeboten. Bei der vorliegenden Erfindung ist es wichtig, einen doppelten Reißverschluß zu verwenden, d.h. zwei paralle Reißverschlüsse auf einer Rolle, so daß zwei Verpackungen gleichzeitig parallel zueinander an jeder Seite einer Mittellinie ausgebildet werden können. Die beiden separaten oberen Reißverschlußhälften 11 werden auf einem Substrat 12 bereitgestellt, welches zwei untere Reißverschlußhälften umfaßt, wobei das Substrat möglicherweise in Längsrichtung durch Schneidräder geschnitten sein kann. Die Ausgestaltung eines derartigen Reißverschlußmaterials ist aus den Fig. 1, 3 und 6 zu ersehen, wobei diese spezielle Ausgestaltung nicht wichtig für die vorliegende Erfindung ist.

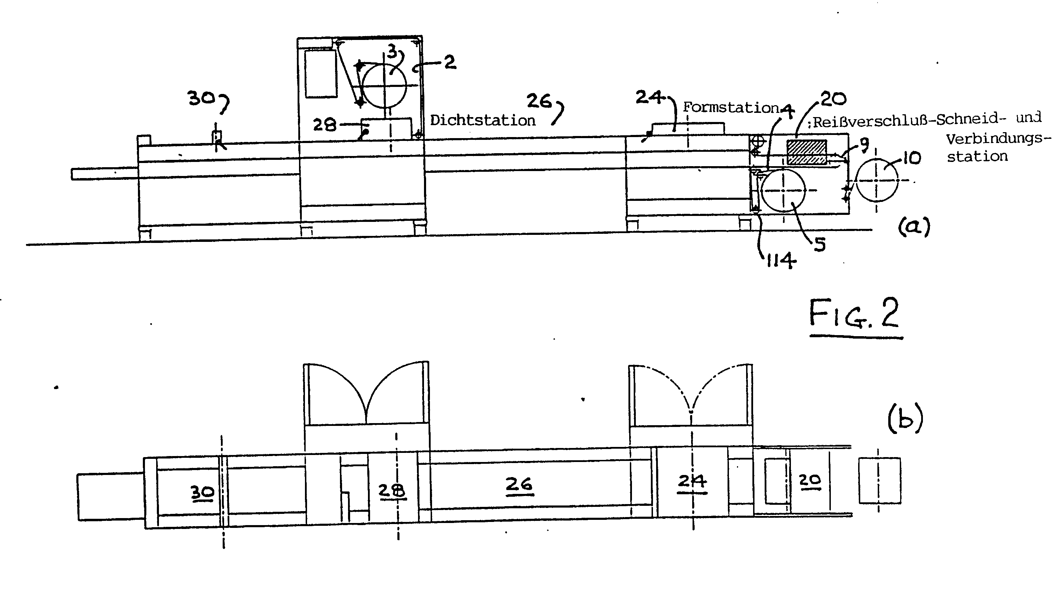

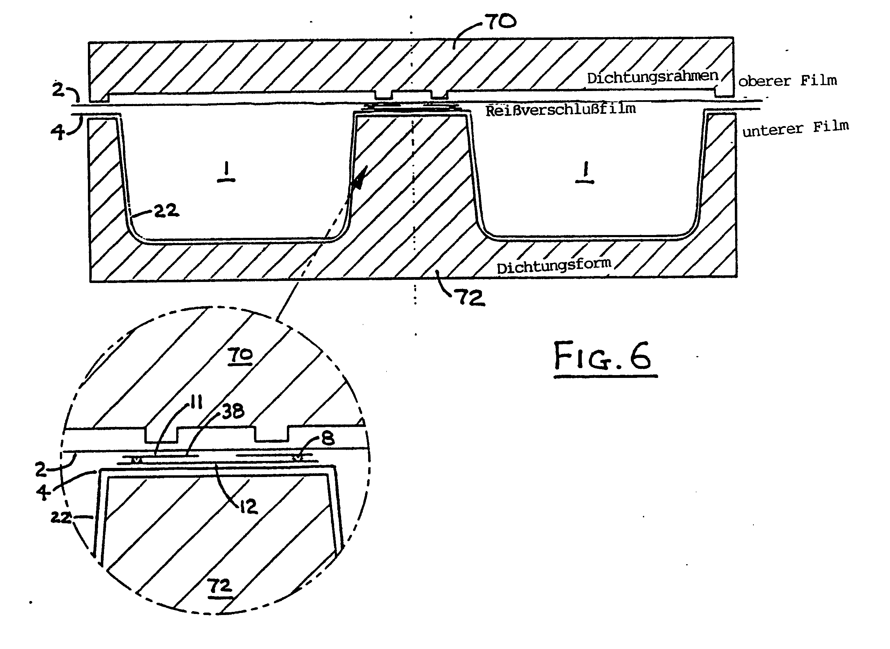

Die Fig. 2 zeigt in schematischer Weise eine Anlage, welche zur Herstellung der zur Rede stehenden Verpackungen verwendet wird. Mit Ausnahme der Reißverschluß-Aufbringungsanordnung 20 ist die Maschine im wesentlichen die gleiche, welche im allgemeinen aus dem stand der Technik bekannt ist, wie etwa die Tiromat-Einrichtung, welche von der Firma Krämer & Grebe, Waterloo, Ontario, Canada hergestellt wird. Durch geringfügige und naheliegende Veränderungen kann die Reißverschluß-Aufbringungsanordnung an die meisten Vakuum-Verpakkungsmaschinen angepaßt werden. Sie bringt den Reißverschluß vor den üblichen Arbeitsschritten des Formens, Füllens und Dichtens der Verpackungen auf. Das Formen und Füllen der Verpackungen in exakt gleicher Weise, wie aus dem Stand der Technik bekannt. Das untere Flächenteilmaterial 4 wird in konventioneller Weise von einer Rolle 5 zugeführt, wird um eine an einem Federarm gelagerte Spannwalze 114 geleitet und wird in üblicher Weise unter einem Vakuum verformt, um einen offenen Behälter 22 in der Vakuumformstation 24 auszubilden. Vor dem Eintritt in die Vakuumformstation bringt jedoch die erfindungsgemäße Vorrichtung das Reißverschlußmaterial 9 auf, welches von einer Rolle 10 zugeführt wird, so wie dies nachfolgend im einzelnen beschrieben werden wird. Nach jeder Vakuumformung wird der Behälter in konventioneller Weise in der Ladezone 26 befüllt. Das obere Flächenmaterial 2 wird daraufhin von einer Walze 3 zugeführt und mit dem unteren Flächenmaterial in der Vakuum-Dichtungsstation 28 hermetisch versiegelt, so wie dies in Fig. 6 dargestellt ist, wobei der Siegelungs- oder Dichtungsrahmen 70 gegen die Siegelform 72 gepreßt wird. Die Verpackungen werden daraufhin voneinander in seitliche Richtung durch Schnittstäbe und in Längsrichtung durch Schnittwalzen in dem Schnittbereich 30 getrennt.

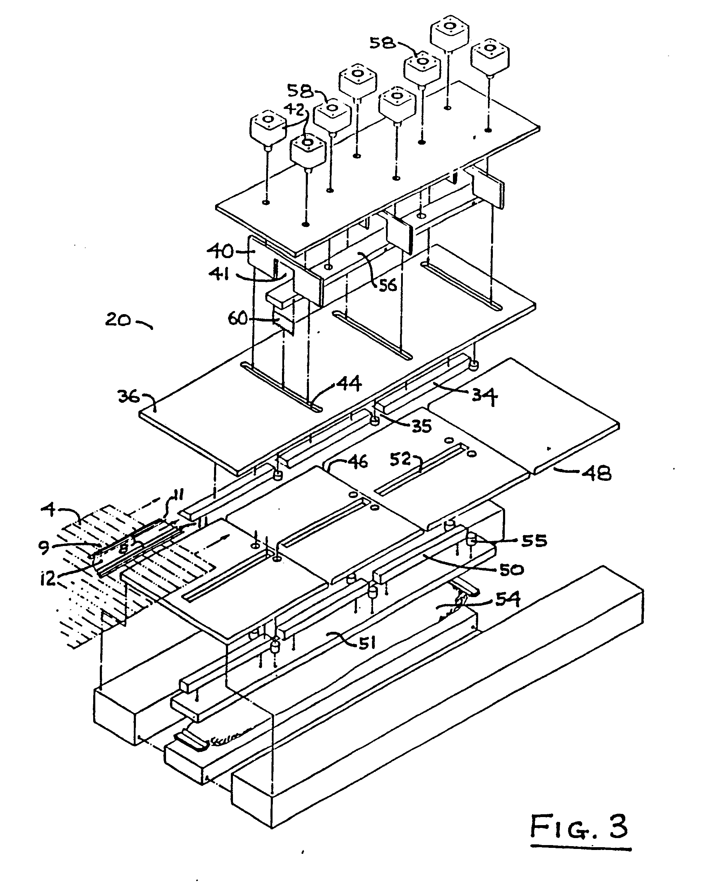

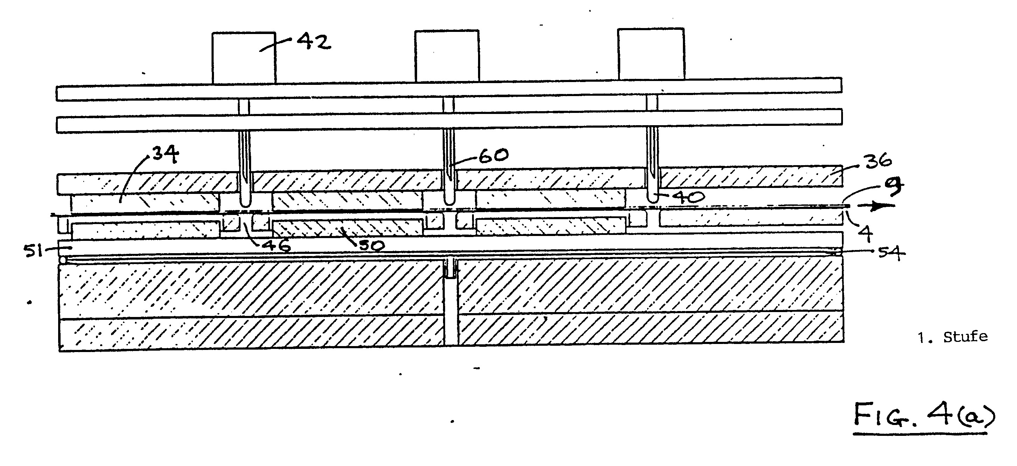

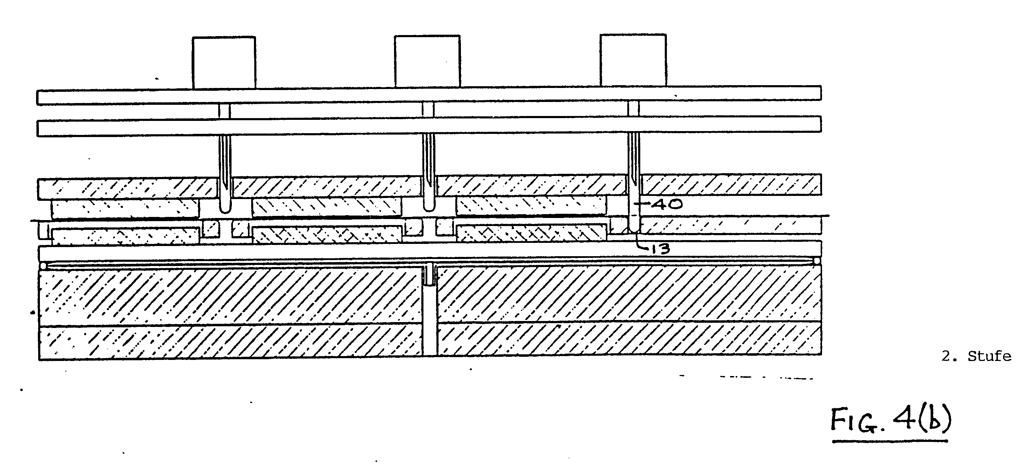

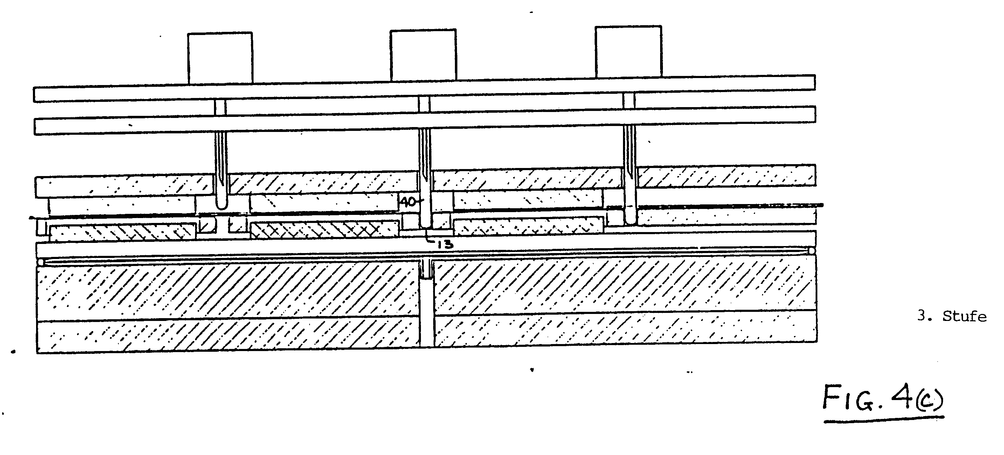

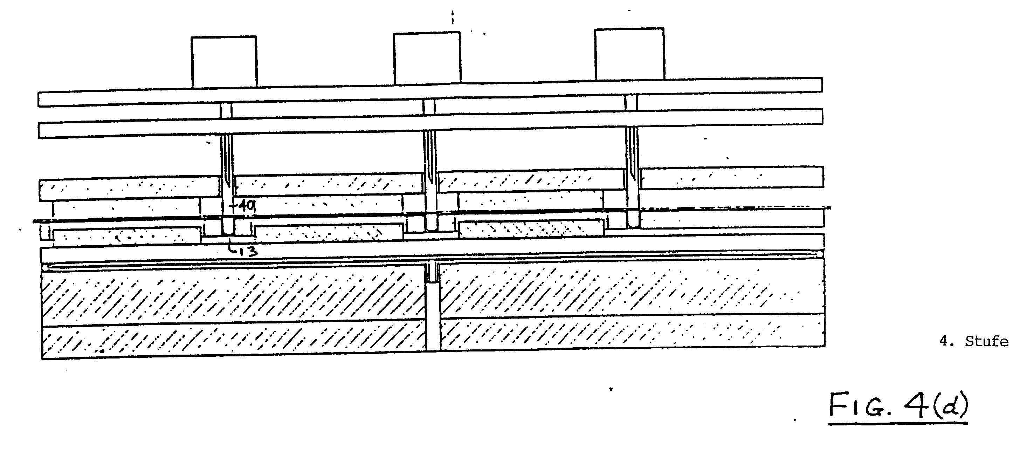

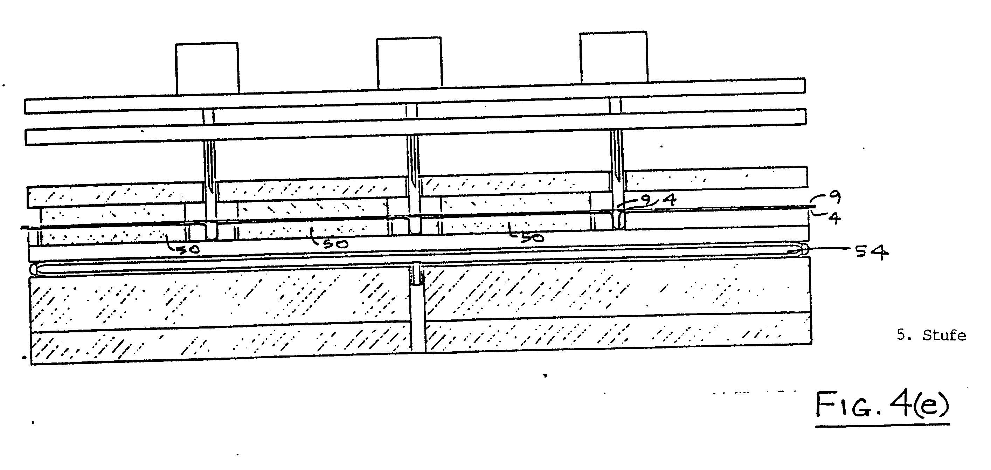

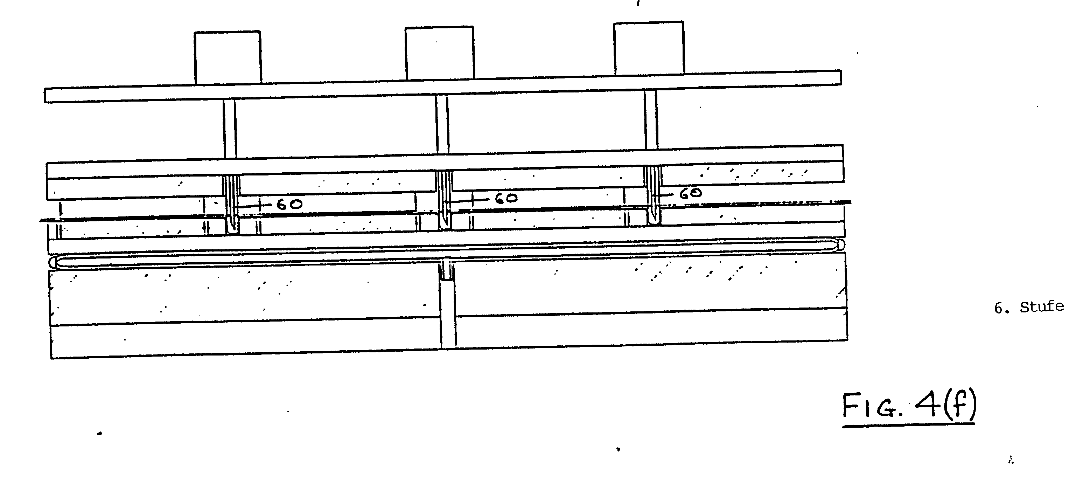

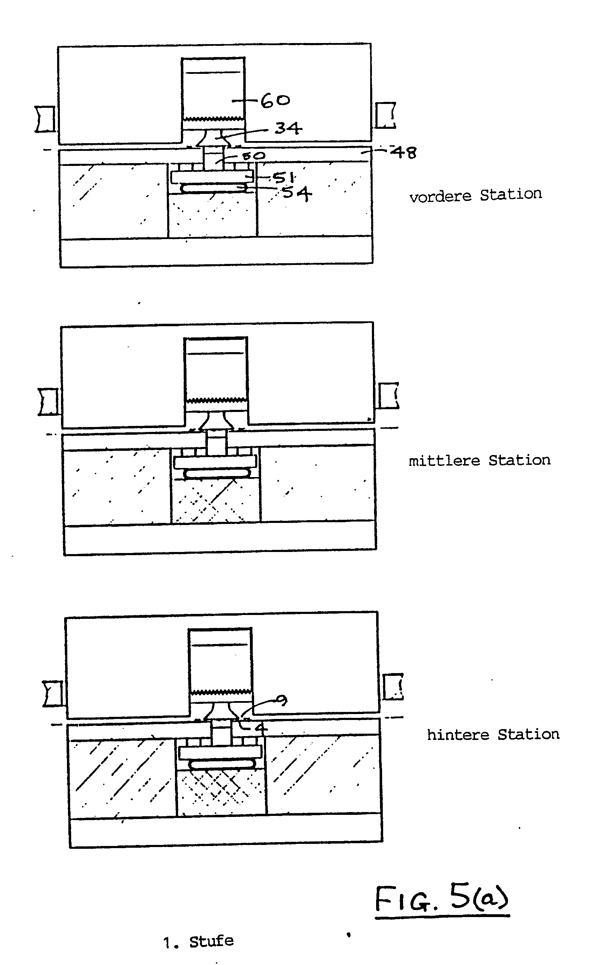

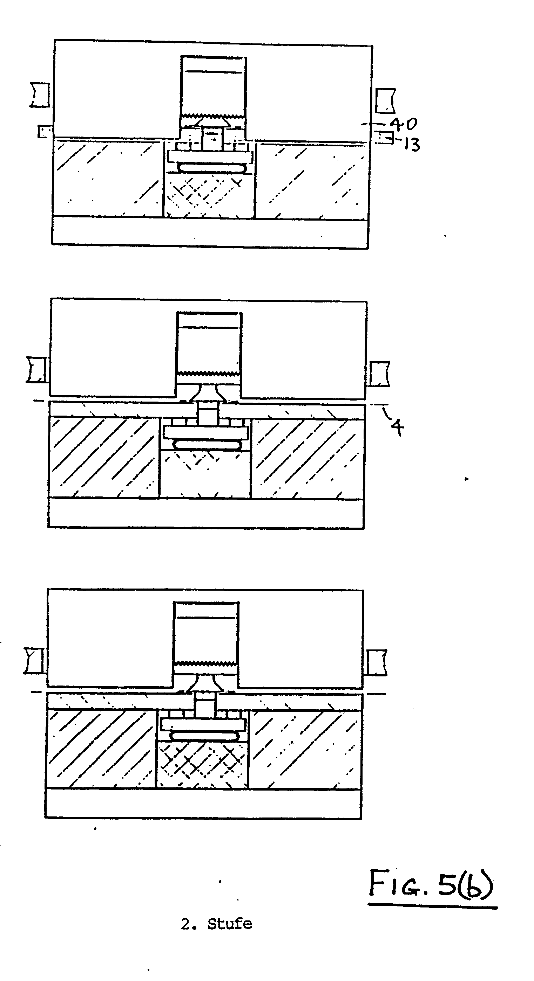

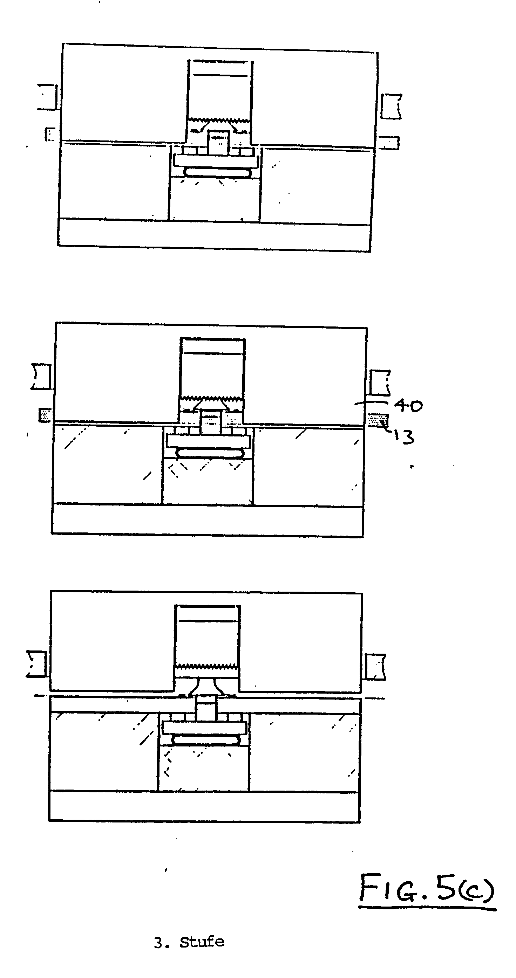

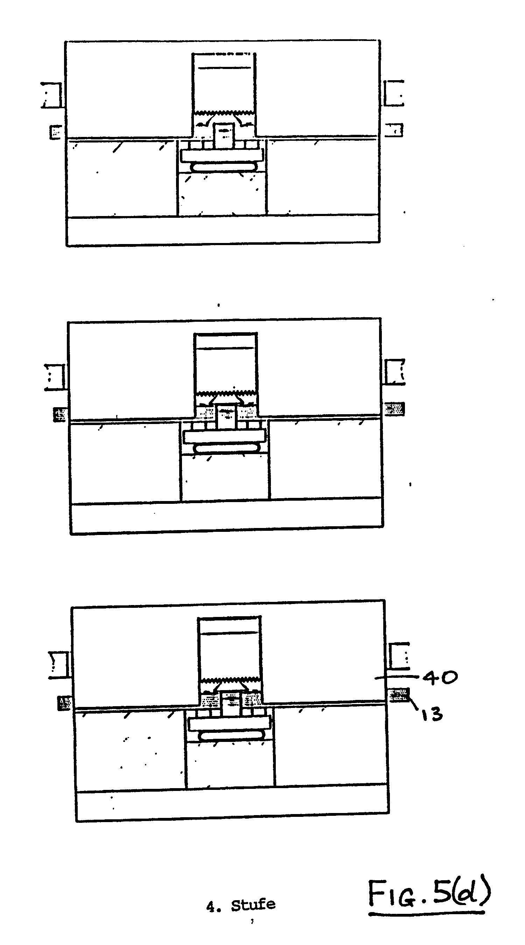

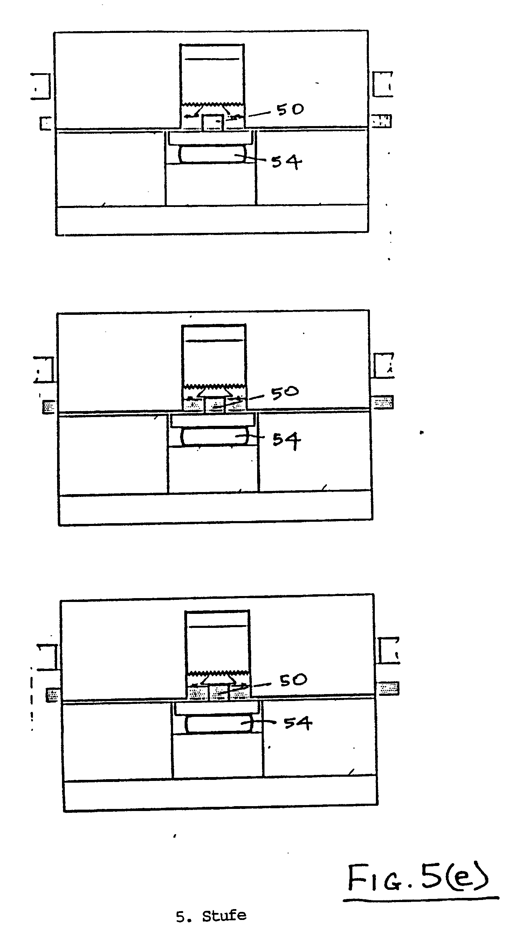

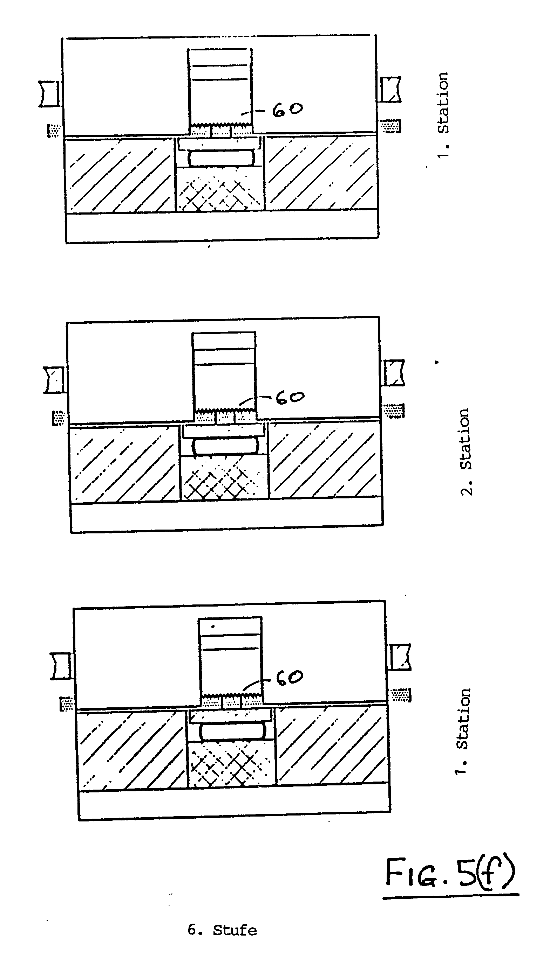

Die Fig. 3, 4 und 5 zeigen ein bevorzugtes Ausführungsbeispiel der Vorrichtung und erläutern, wie die erfindungsgemäßen wiederverschließbaren Vakuumverpackungen hergestellt werden. Die Vorrichtung ist am besten aus Fig. 3 zu ersehen, wobei die Verfahrensschritte der Ausbildung der Verpackungen am besten aus Fig. 4, d.h. in Fig. 4a - 4f und in Bezug auf die korrespondierenden Fig. 5a- 5f zu ersehen sind.

Nachfolgend wird unter Bezug auf Fig. 4 das Verfahren zur Ausbildung der Verpackungen so einfach wie möglich beschrieben. Die Fig. 4a zeigt eine erste Stufe des Betriebszyklus, wobei das untere Flächenmaterial 4, beispielsweise ein Polyäthylensubstrat, und das Reißverschlußmaterial 9 gezeigt sind, welche in der Vorrichtung so angeordnet sind, daß diese für den Beginn des Arbeitszyklus vorbereitet sind. In der in Fig. 4 gezeigten Vorrichtung wurden das Flächenmaterial und das Reißverschlußmaterial von der linken Seite in die Vorrichtung eingeführt. In Fig. 4b ist eine zweite Stufe dargestellt, welche eine seitliche Schleife 13 zeigt, die in dem unteren Flächenmaterial durch den vordersten Formbalken 40 ausgebildet wurde. Die Fig. 4c zeigt die dritte Stufe, in welcher eine seitliche Schleife 13 durch den mittleren Formbalken 40 ausgebildet ist. In Fig. 4d ist eine vierte Stufe dargestellt, in welcher eine seitliche Schleife 13 durch den hintersten Formbalken 40 gebildet ist. Die Fig. 4e zeigt eine fünfte Stufe, in welcher beheizte Verbindungsbalken, die an einer Platte 51 gelagert sind, durch einen aufblasbaren pneumatischen Beutel 54 nach oben gedrückt sind, um das untere Flächenmaterial 4 mit dem Reißverschlußmaterial 9 zu verbinden, wobei das Reißverschlußmaterial die Spalten überbrückt, welche durch die Schleifen ausgebildet wurden. Gleichzeitig oder geringfügig später, wie in Fig. 4f dargestellt, werden Schneidmesser 60 nach unten bewegt, um das Reißverschlußmaterial zu schneiden. Die Verbindungsbalken und -messer werden daraufhin in ihre in Fig. 4a gezeigten Positionen zurückgezogen, das Flächenteil wird nachfolgend nach vorne aus der Reißverschluß-Aufbringungsanordnung herausgezogen, woraufhin es seine normale flache Form ein nimmt. Dieses Vorgehen erzeugt Diskontinuitäten in dem Reißverschlußmaterial, bezogen auf das untere Flächenmaterial, wobei die Länge der Diskontinuitäten, üblicherweise ungefähr 15 mm, selbstverständlich mit den Abmessungen der seitlichen Schleifen korrespondiert. Die Verpackungen können deshalb über die Enden der Reißverschlußstreifen 8 verschweißt werden, nämlich durch ein Versiegeln durch den Bereich der Diskontinuität. Dies erzeugt die in Fig. 1 gezeigten Verpackungen, wobei jede Verpackung einen durchgehenden Versiegelungsbereich 6 aufweist, wobei die Reißverschlußstreifen 8 innerhalb des äußeren Umfangs des Versiegelungsbereiches enden.

In Abhängigkeit von der Abmessung der seitlichen Schleifen relativ zu der Breite des Dichtungsbereiches kann eine schmale Öffnung zwischen den Enden der Reißverschlußstreifen 8 und dem Dichtungsbereich 6 verbleiben, welche von einer relativ geringen Konsequenz für den Endverbraucher ist, da diese nicht die Unversehrtheit der Vakuumdichtung beeinflußt. Es ist wichtiger, daß die Vakuumdichtung an dem Rahmen erhalten bleibt. Nachdem das Produkt durch den Verbraucher geöffnet wurde, ist es nicht kritisch, daß die Dichtung luftdicht bleibt. Bevorzugterweise enden jedoch die Reißverschlußstreifen gerade in dem Dichtungsbereich 6, so daß hier kein Spalt ausgebildet wird.

In der einfachsten Form umfaßt das Verfahren somit die Arbeitsschritte der Ausbildung einer seitlichen Schleife in dem unteren Flächenmaterial, wobei ein Reißverschlußmaterial über den Bereich der Schleife angeordnet wird, das Abtrennen des Reißverschlußmaterials und das nachfolgende Geradeziehen des Flächenmaterials.

Mit Bezug auf Fig. 3 wird nachfolgend im einzelnen ein bevorzugtes Ausführungsbeispiel der Reißverschluß-Aufbringungsanordnung im Detail beschrieben. Wie sich aus Fig. 2 ergibt, nimmt diese das untere Flächenteil 4 des Verpackungsmaterials, beispielsweise Polyäthylen, von der unteren Materialrolle 5 auf. Es nimmt weiterhin das Reißverschlußmaterial 9 von einer Reißverschlußmaterialrolle 10 auf. Wie oben erwähnt, weist das Reißverschlußmaterial, welches bei dem bevorzugten Ausführungsbeispiel verwendet wird, doppelte Reißverschlüsse auf, so daß zwei Verpackungen in einer Arbeitslinie parallel zueinander ausgebildet werden können.

Das untere Flächenteil 4 wird in die Reißverschluß-Aufbringungsanordnung 20 vorbewegt. Bei dem gezeigten Ausführungsbeispiel sind zwei parallele Reihen von jeweils drei Verpackungen jeweils gleichzeitig in Bearbeitung. Es ist offensichtlich, daß auch mehr oder weniger Verpackungen, in Abhängigkeit von der Abmessung der Anordnung, ausgebildet werden können, ohne daß dadurch das Prinzip der vorliegenden Erfindung verändert würde.

Das Reißverschlußmaterial wird über einen Führungsschuh 34, welcher an der Unterseite einer oberen Führungsplatte 36 angeordnet ist, zugeführt. Der Führungsschuh dient dazu, das Material in geeigneter Weise in seiner Position zu halten, sowie die Verbindungsflansche 38 der oberen Reißverschlußhälften 11 (siehe Fig. 6) freizuhalten, durch deren Zusammenwirken, welche an der oberen Fläche des Führungsschuhes positioniert sind, so daß sie nicht mit dem unteren Flächenteil 4 verbunden werden.

Die seitliche Schleife wird nachfolgend durch Schleifenformbalken 40 ausgebildet, welche durch pneumatische Zylinder 42 betätigt sind, um das untere Flächenteil 4 nach unten durch Schlitze 44 der oberen Führungsplatte 36 in Nuten 46 in dem Tisch 48 zu pressen. Bei dem dargestellten Ausführungsbeispiel sind, da sechs Packungen in zwei parallelen Reihen zu bearbeiten sind, drei Nuten 46 vorgesehen, nämlich jeweils eine an der Vorderseite jeder Packungsreihe. Automatische Steuerungen betätigen die pneumatischen Zylinder in schneller Abfolge, so daß die vorderste seitliche Schleife der drei Schleifen ausgebildet wird, nachfolgend die mittlere Schleife und dann die hinterste Schleife. Diese zeitliche Abstimmung ist erforderlich, damit das zusätzliche Flächenteilmaterial, welches zur Ausbildung jeder Schleife erforderlich ist, von der Rolle 5 oder von einer Schleife, welche um die Spannungswalze 114 ausgebildet ist, nachgezogen werden kann. Die Spannungswalze 114 bewegt sich nach oben, wenn das Material schnell abgezogen wird und bewegt sich daraufhin unter der Spannung ihres Federarmes wieder nach unten, um das Material von der Rolle 5 abzuziehen.

Nachdem die seitliche Schleife ausgebildet wurde, wird das Reißverschlußmaterial 9 längs der zentrischen Linie verbunden, wobei es sich über die durch die Schleifen ausgebildeten Spalte erstreckt. Das Verbinden erfolgt mittels geheizter Verbindungsbalken 50, welche durch die Verbindungsbalkenschlitze 52 in dem Tisch 48 durch einen aufblasbaren pneumatischen Beutel 54 nach oben gedrückt werden. Die Balken pressen das untere Flächenteil gegen die Unterseite des Führungsschuhs 34.

Ein Bereich der oberen und unteren Reißverschlußhälften nahe der Vorderseite jeder Verpakkung werden zusammengedrückt, um eine Verschiebung der oberen Reißverschlußhälften zu verhindern, dies erfolgt durch Vorsprünge 55, die in der Platte 51 gelagert sind.

Nachfolgend wird ein Schneidbalken 56 durch die Schlitze 44 mittels eines pneumatischen Zylinders 58 nach unten bewegt. Dies erfolgt bevorzugterweise gleichzeitig mit dem Verschweißen des Reißverschlußmaterials, da der gesamte Zyklus schnell ablaufen muß (typischerweise 15 Zyklen pro Minute), obwohl dies auch einen kurzen Zeitraum später, falls erforderlich, erfolgen kann. Der Schneidbalken trägt Schneidmesser 60 gegenüberliegend zu jeder Schleifenanordnung, um das Reißverschlußmaterial zu brennen. Die Schleifenbildungsbalken 40 weisen eine Nut 41 auf, um den Schneidbalken aufzunehmen. Der Führungsschuh 34 ist nicht ununterbrochen, sondern weist Zwischenspalte 35 auf, durch welche die Schneidmesser durchgeleitet werden können. Das untere Flächenteil 4 wird daraufhin weiterbewegt, um dieses wiederum flach anzuordnen, wodurch ein Spalt oder eine Diskontinuität in dem Reißverschlußmaterial zwischen jeder Verpackungsanordnung ausgebildet wird, und wird weit genug weiter gefördert, um die nächsten drei Reihen in der Anordnung zur Wiederholung des Zyklus anzuordnen.

Das somit mit einem Reißverschluß versehene untere Flächenteil 4 wird nachfolgend längs der konventionellen Verpakkungsmaschine weitergefördert, um in der Vakuumformstation 24 geformt, in der Füllstation 26 gefüllt und in der Dichtstation 28 versiegelt zu werden.

In der Dichtstation 28 wird, wie in Fig. 6 dargestellt, das obere Flächenteil 2 von einer Rolle 3 zugeführt und in einem durchgehenden Dichtungsbereich 6 um die Kante jeder Verpackung versiegelt, und zwar mittels eines Siegelrahmens 70, welcher gegen eine Siegelform 72 in konventioneller Weise wirkt. Das obere Flächenteil wird ebenso mit der oberen Hälfte des Reißverschlußmaterials verbunden.

Bei dem oben beschriebenen Ausführungsbeispiel ist der Abstand zwischen den Schleifen-Formstationen feststehend, so daß unterschiedliche Pakkungslängen nicht realisiert werden können. Dieses Ausführungsbeispiel ist aus Kostengründen in Situationen zu bevorzugen, in welchen die Anordnung nur für eine Packungslänge zu verwenden ist.

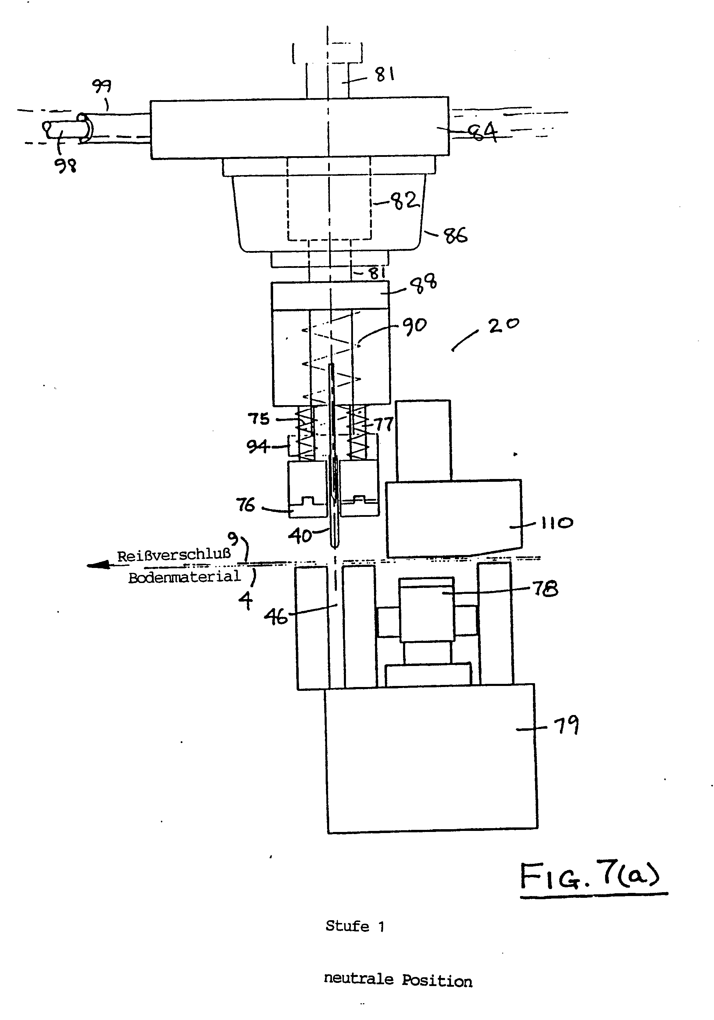

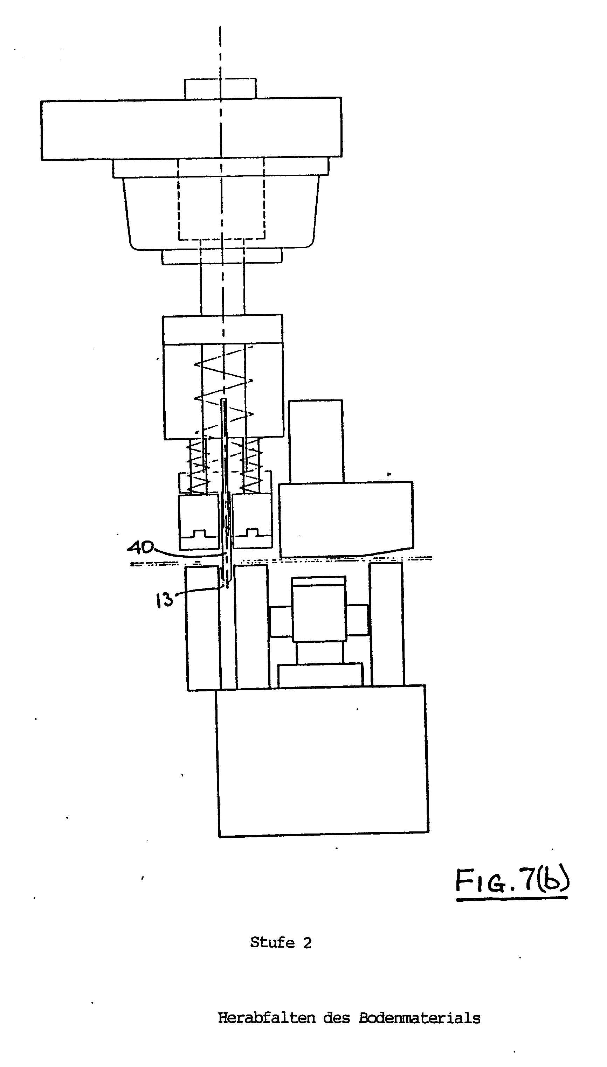

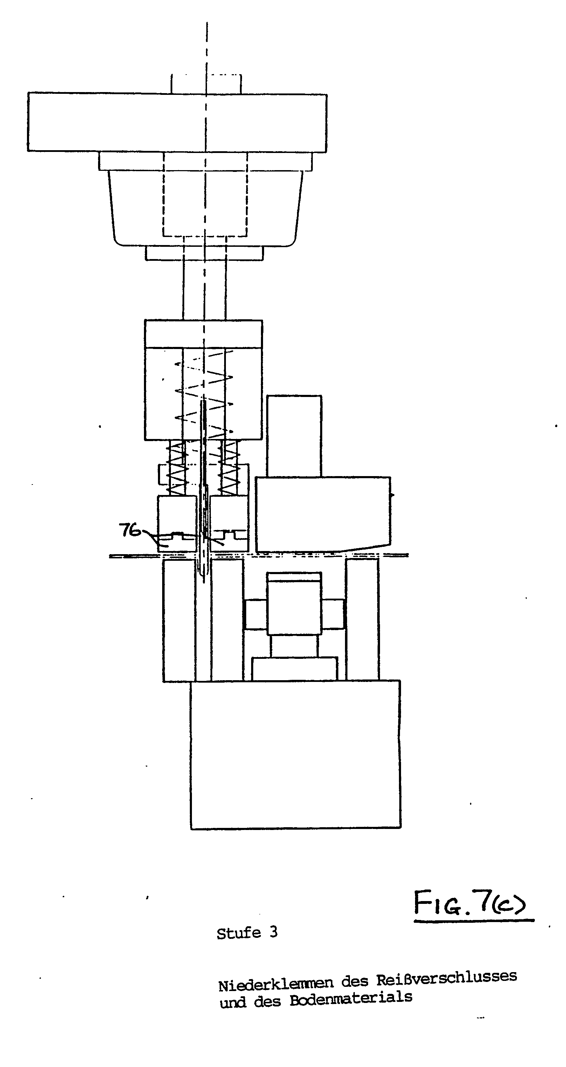

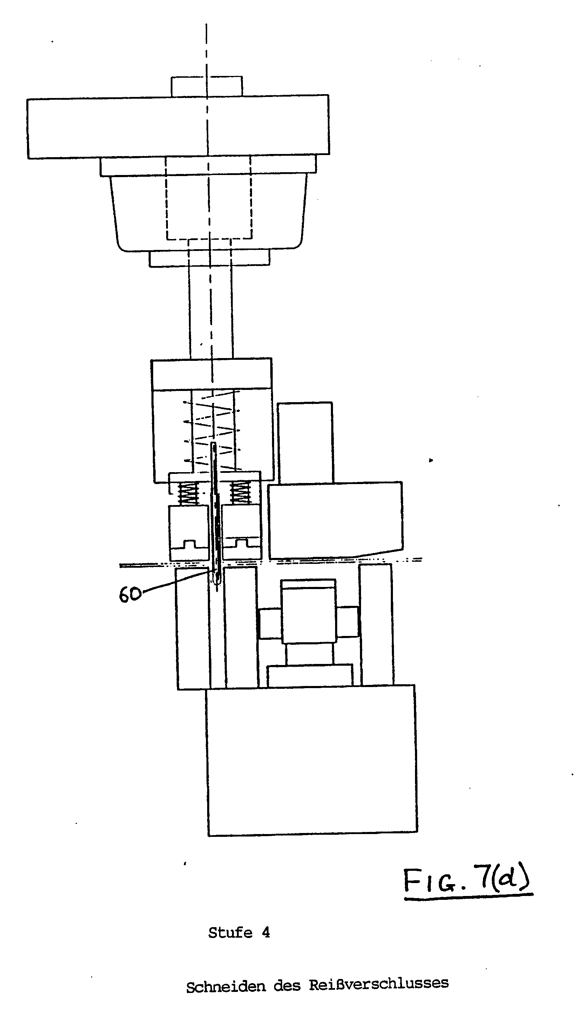

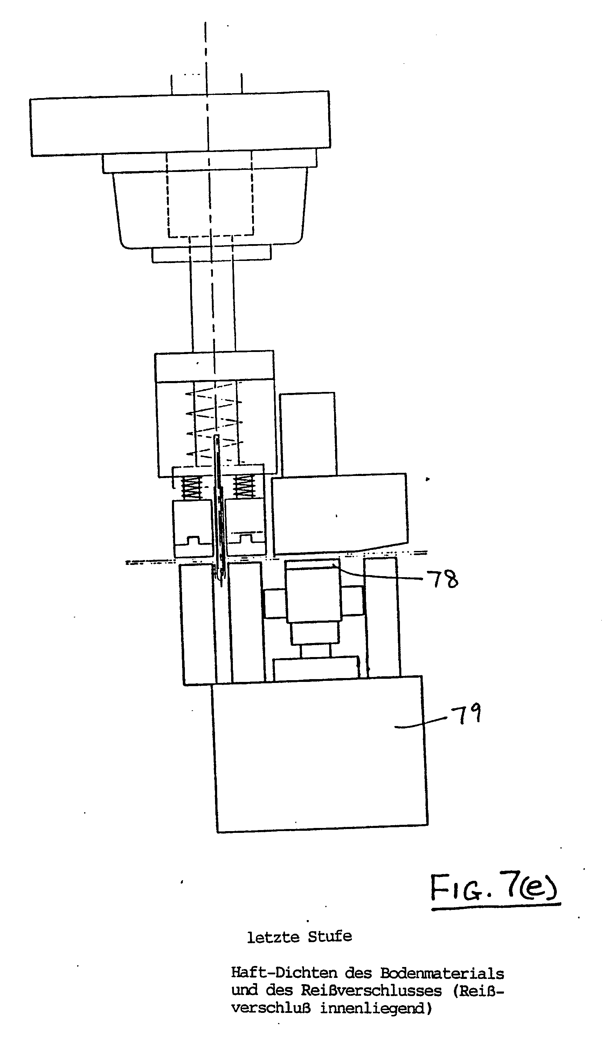

Nachfolgend wird auf die Fig. 7 - 12 Bezug genommen, welche ein weiteres Ausführungsbeispiel beschreiben. Dieses alternative Ausführungsbeispiel ist im allgemeinen zur Verwendung zu bevorzugen, wenn Verpackungen unterschiedlicher Längen von Zeit zu Zeit hergestellt werden sollen, da der Abstand zwischen den Schleifenformstationen variiert werden kann.

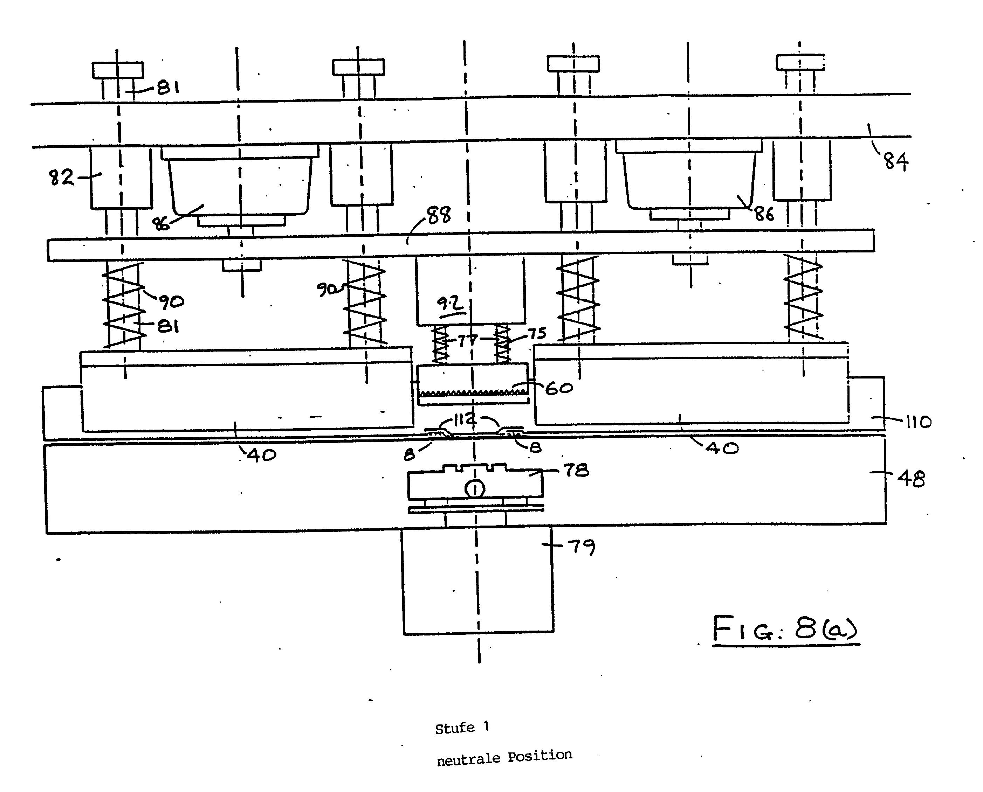

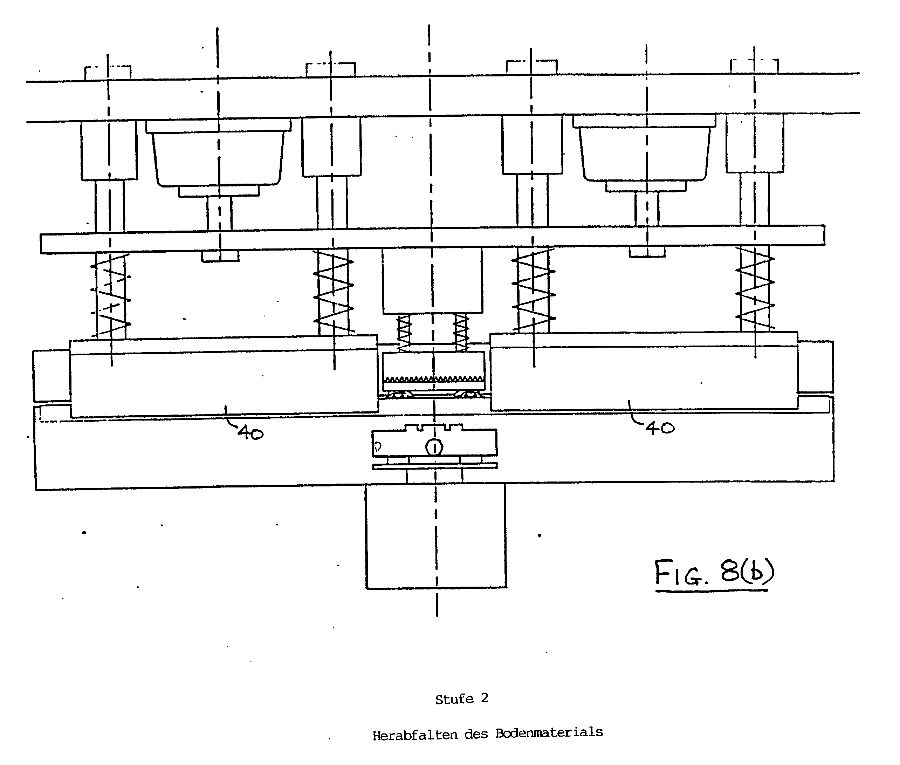

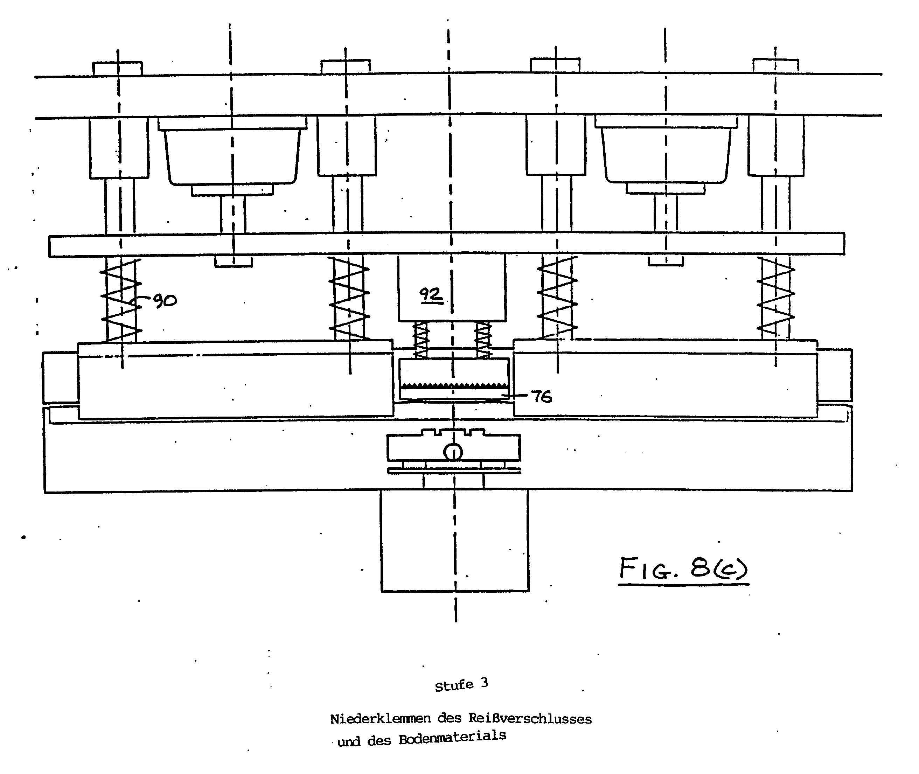

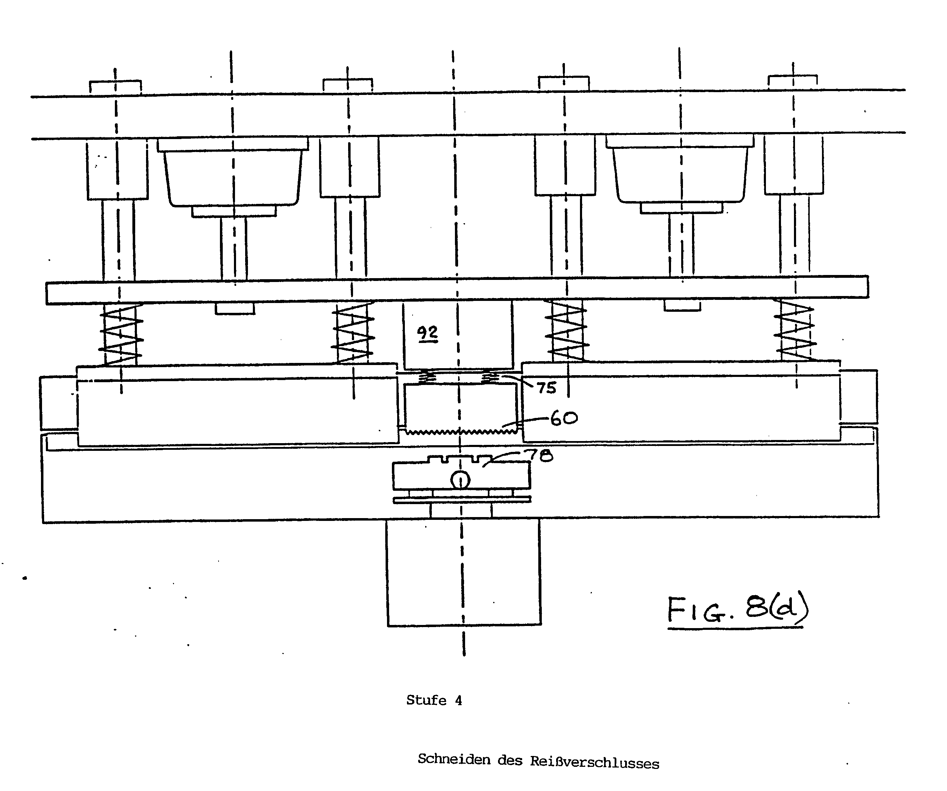

In den Fig. 7a und 8a ist die alternative Vorrichtung in einer ersten Stufe des Betriebszyklus dargestellt. Das untere Flächenteil 4 und das Reißverschlußmaterial 9 sind in dem Gerät positioniert, es liegt ein betriebsfertiger Zustand für den Beginn des Zyklus vor. In der in Fig. 7 gezeigten Vorrichtung wurden das Flächenmaterial und das Reißverschlußmaterial von der rechten Seite in die Vorrichtung eingeführt. Die Fig. 7b und 8b zeigen die zweite Stufe, in welcher eine seitliche Schleife 13 durch den Formbalken 40 in dem unteren Flächenmaterial ausgebildet ist. Die Fig. 7c und 8c zeigen die dritte Stufe, in welcher das Reißverschlußmaterial durch Klemmbalken 76 niedergehalten wird. In den Fig. 7d und 8d ist eine vierte Stufe dargestellt, in welcher ein Schneidmesser 60 zum Schneiden des Reißverschlußmaterials nach unten angetrieben wird. Die Fig. 7e und 8e zeigen die letzte Stufe, in welcher ein Haft-Verbindungsbalken 78 durch einen pneumatischen Zylinder 79 nach unten gedrückt wird, um das untere Flächenteil 4 an dem Reißverschlußmaterial 9 anzuheften, wobei das Reißverschlußmaterial den durch die Schleife gebildeten Spalt überbrückt. Die einzelnen Bauelemente ziehen sich nachfolgend in ihre in Fig. 7a gezeigten Positionen zurück, das Flächenteil wird nach vorne aus der Reißverschluß-Aufbringungsanordnung herausgezogen, woraufhin es seine normale flache Gestalt einnimmt, durch welche der Spalt hervorgerufen wird.

Wie in dem zuerst beschriebenen Ausführungsbeispiel können mehrere derartige Stationen in einer Serie angeordnet sein, so daß mehr als eine Reihe von Verpackungen gleichzeitig produziert werden können. Die zeitliche Abstimmung muß wie oben beschrieben so arrangiert sein, daß die Schleifen in einer Abfolge von vorne nach hinten ausgebildet werden.

Es ist darauf hinzuweisen, daß die Stufe, welche in Fig. 7e dargestellt ist, d.h. die letzte Stufe in der Herstellung einer Haftverbindung den vorhergehenden Stufen nicht in direkter Abfolge folgen muß. Sie kann vielmehr zu jedem Zeitpunkt beginnen, sobald die Schleife ausgebildet ist.

In dieser alternativ ausgebildeten Anordnung erfolgt die Abfolge der Stufen in den Fig. 7a - 7d bevorzugterweise durch eine nach unten gerichtete Betätigung einer einzelnen Anordnung, als bei einer separaten Betätigung eines Schleifenformbalkens, von Klemmeinrichtungen und einem Schneidmesser.

In jeder Station sind jeweils zwei Schleifenformbalken 40, einer an jeder Seite des Reißverschlußbereiches, an zwei Lagerwellen 81 gelagert. Die Lagerwellen sind durch Führungsbuchsen 82, welche in einem horizontalen oberen Rahmenbauelement 84 angebracht sind, nach oben und nach unten bewegbar. Zwei pneumatische Zylinder 86 an jeder Station bewegen einen Querbalken 88 nach oben und nach unten. Wenn sich der Querbalken nach unten bewegt, bilden die Schleifen-Formbalken die Schleifen aus. Wenn sich der Querbalken weiter nach unten bewegt, werden die Schleifen-Formbalken, die an Blöcken 94 gelagert sind, über Federn 90 gedrückt, bis sie sich nach unten in den Nut des Tisches (Fig. 7b und 8b) erstrecken. Weiterhin ist an dem Querbalken eine Klemm-und Schneidanordnung 92 gelagert, welche zwei Klemmbalken 76, die von Bolzen 77 aufgehängt sind, umfassen, wobei Federn 75 zwischen den Klemmbalken und den Klemmbalkenlagern 74 angeordnet sind, sowie ein Schneidmesser 60, welches zwischen den Klemmbalkenlagern vorgesehen ist und sich von diesen aus nach unten erstreckt. Eine weitere nach unten gerichtete Bewegung des Querbalkens führt zu einer Komprimierung der Feder 90 zwischen den Blöcken 94 und dem Querbalken und drückt die Klemmbalken gegen das Reißverschlußmaterial und das untere Flächenteil (Fig. 7c und 8c). Eine weitere nach unten gerichtete Bewegung komprimiert die Federn 75 und drückt das Schneidmesser 60 durch das Reißverschlußmaterial (Fig. 7d und 8d). Ein Zurückziehen der Zylinder 86 führt den Querbalken zu seinem oberen Anschlag (Fig. 7a und 8a) und hebt die Schleifenformbalken von dem Tisch über Heber 96 ab, welche in Nuten an den Lagerwellen der Federklammern 97 angebracht sind, so daß die obere Fläche des Querbalkens mit den Hebern in der nach oben gerichteten Bewegung in Eingriff gelangen, um die Lagerwellen in den Fig. 7a und 8a gezeigte Position anzuheben.

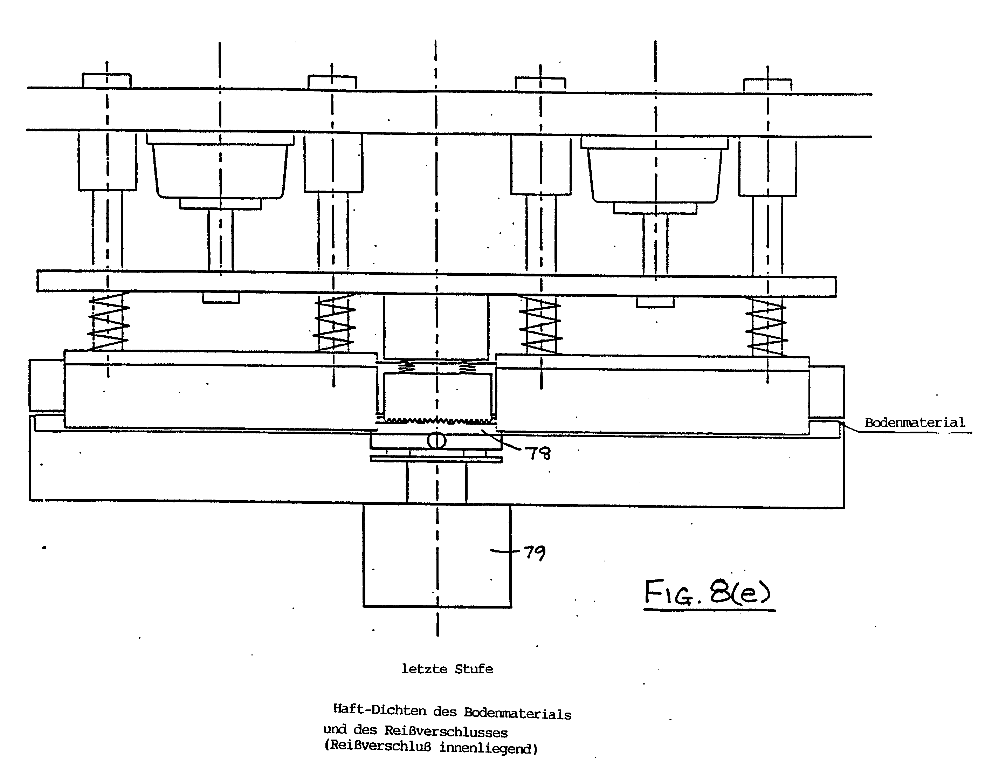

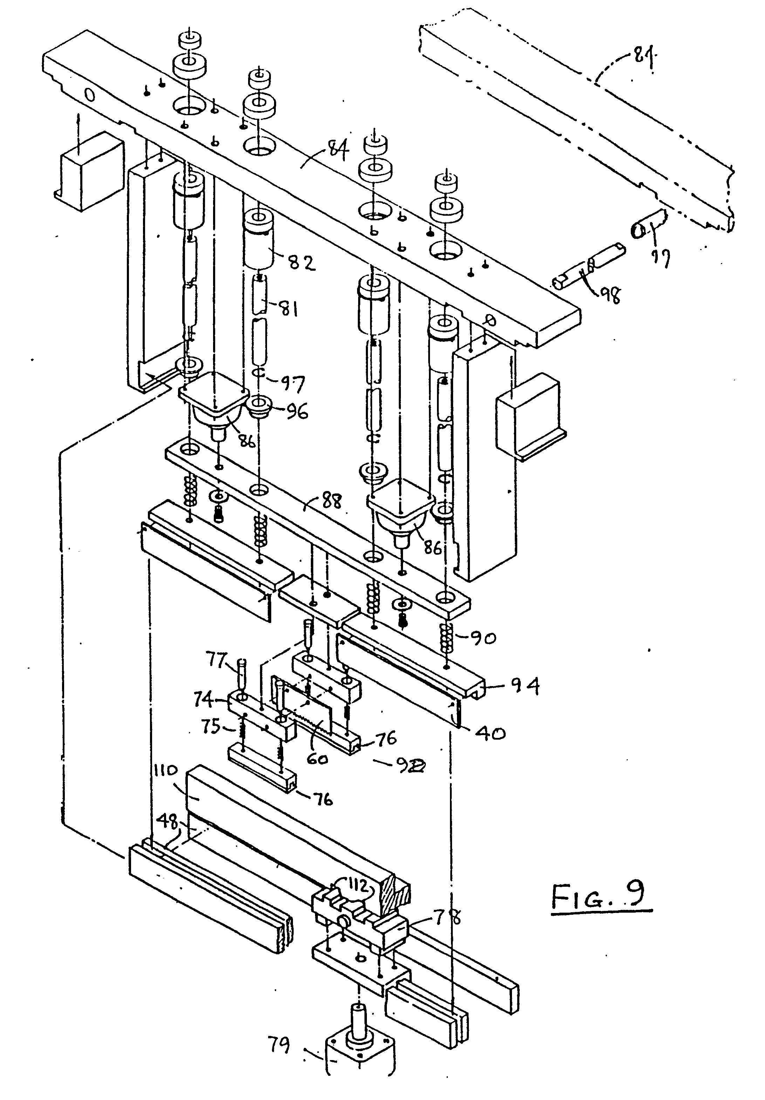

Die Fig. 9 zeigt die einzelnen Komponenten in größerem Detail als die Fig. 7 und 8.

Die Einstellbarkeit des Abstandes der Stationen beruht auf der Tatsache, daß das horizontale obere Rahmenbauteil 84 jeder Station an Führungsbolzen 98 an jeder Seite gelagert ist. Ein unterschiedlicher Abstand kann in einfacher Weise dadurch vorgenommen werden, daß unterschiedliche Längen von Abstandshülsen 99 über die Führungsbolzen und zwischen diese oberen Rahmenbauelemente eingefügt werden.

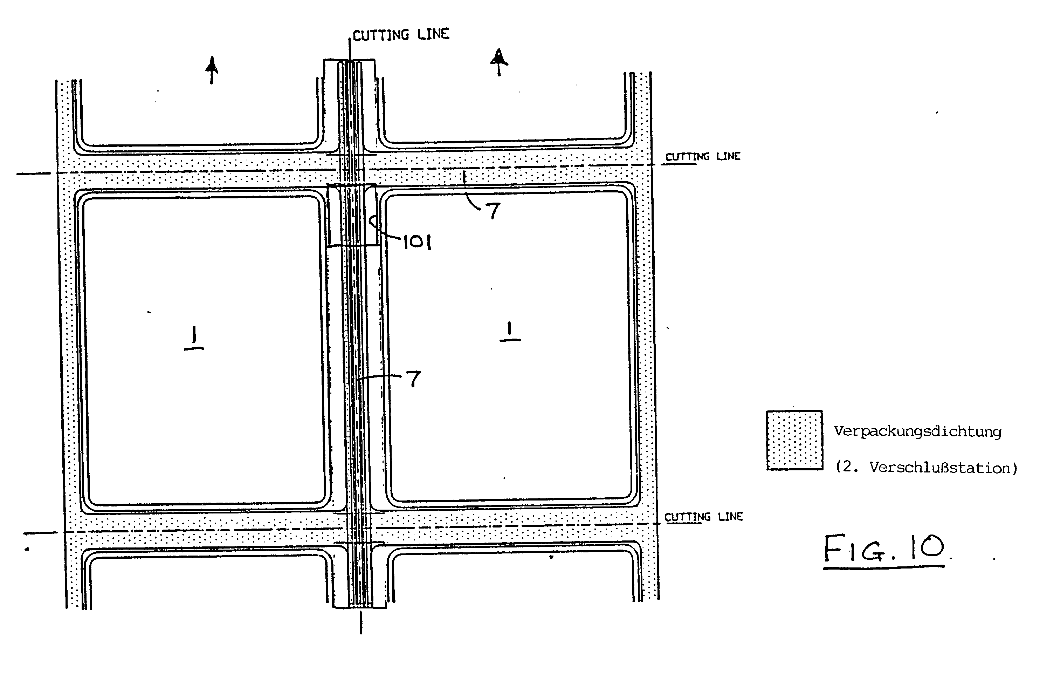

Bei dem ersten beschriebenen Ausführungsbeispiel wurde die gesamte Länge des Reißverschlußmaterials in dieser Stufe mit dem unteren Flächenteil verbunden. Da jedoch in diesem zweiten Ausführungsbeispiel nur ein Bereich 101 der Länge des Reißverschlußmaterials in dieser Bearbeitungsstufe in jedem Falle angeheftet ist (siehe Fig. 7 und 10) spielt es keine Rolle, wie lang die Verpackung ist.

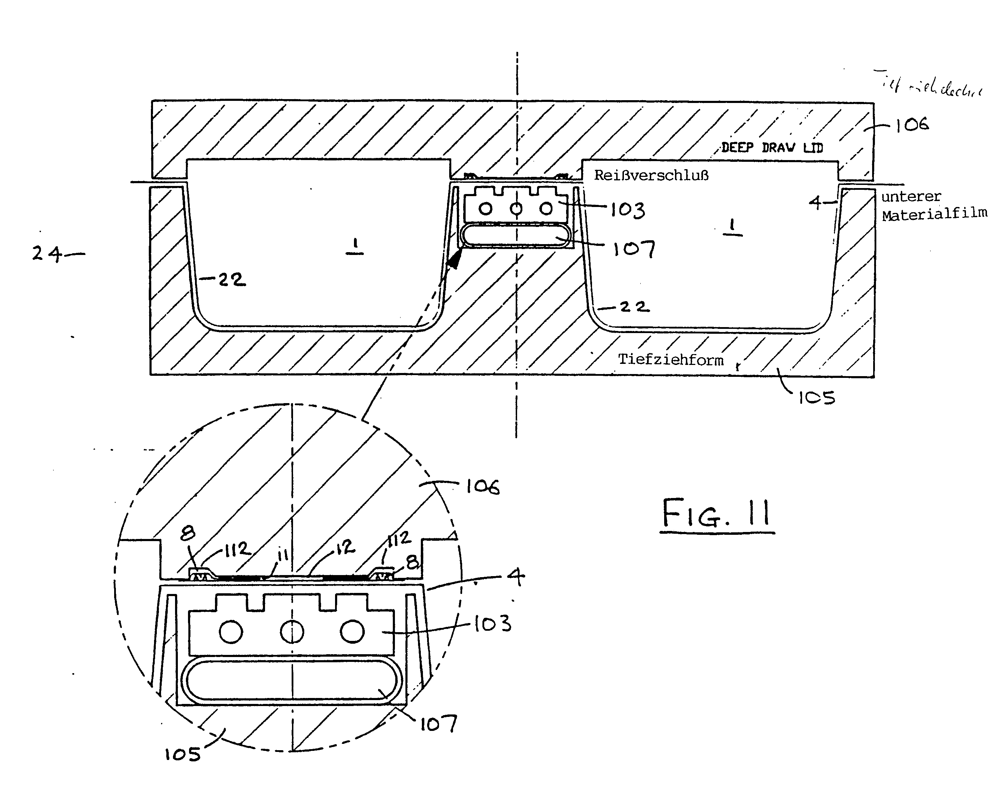

Bei dem alternativen Ausführungsbeispiel wird dagegen das Reißverschlußmaterial in der Formstation der Vorrichtung mit dem unteren Flächenteil verschweißt. Die Fig. 11 zeigt einen beheizten Siegelbalken 103, welcher in der Tiefziehform 105 der Formstation vorgesehen ist, welcher nach oben gegen den Tiefziehdeckel mittels eines pneumatischen Beutels 107 bewegbar ist. Dieser versiegelt das untere Flächenteil 4 mit dem Reißverschlußmaterialsubstrat 12. Die oberen Reißverschlußhälften 11 werden ebenfalls mit dem Substrat 12 verbunden, obwohl dies nicht eine permanente Verbindung ist, da das Reißverschlußmaterial, wie aus dem Stand der Technik bekannt, mit einem Trennmittel zwischen den oberen Hälften und dem Substrat versehen ist, um ein festes Verkleben zu verhindern. Die Bewirkung des Verklebens in dem Formbereich anstelle eines Verklebens in dem Reißverschluß-Aufbringbereich bringt eine Flexibilität hinsichtlich der Verpakkungslänge in dem Reißverschluß-Aufbringbereich. In dem Formbereich müssen auf jeden Fall unterschiedliche Formen für die unterschiedlichen Verpackungsgrößen verwendet werden.

Bei dem ersten Ausführungsbeispiel wird das Reißverschlußmaterial über einen Führungsschuh 34, welcher an der Unterseite einer oberen Führungsplatte 36 befestigt ist, zugeführt. In dem alternativen Ausführungsbeispiel ist wiederum, um die Vorrichtung an unterschiedliche Packungslängen anpassen zu können, eine unterschiedliche Lösung gewählt. Wie in den Fig. 8 und möglicherweise am besten in Fig. 9 gezeigt, ist eine Führungsplatte 110 über dem Tisch 48 positioniert, welche einen engen Schlitz bildet, durch welchen das untere Flächenteil läuft. Im Bereich des Reißverschlußmaterials weist die Führungsplatte Nuten 112 auf, welche im wesentlichen mit dem Querschnittsbereich des Reißverschlußmaterials übereinstimmen, so daß das Reißverschlußmaterial durch diese Nuten geführt ist.

Es ist darauf hinzuweisen, daß die oben stehende Beschreibung des bevorzugten Ausführungsbeispiels nur beispielhaft ist. Für den Fachmann ergeben sich vielfältige Abwandlungsmöglichkeiten, welche im Rahmen der Erfindung möglich sind.

·Beispielsweise kann die gleich Ausgestaltung, obwohl die Verwendung eines wiederverschließbaren Verschlusses speziell bei vakuumverpackten Produkten, wie etwa Nahrungsmitteln, besonders nützlich ist, verwendet werden, wenn sie aus anderen Gründen wünschenswert ist, beispielsweise für wiederverschließbare Verpackungen, welche sich von den vakuum-abgedichteten unterscheiden.

Während obenstehend hauptsächlich von einem versiegelten oder abgedichteten Bereich die Rede ist, ist darauf hinzuweisen, daß die Erfindung ebenso bei einer Siegel-Linie zu verwenden ist, wenn eine derartige Abdichtung oder Siegelung bei einem zu verpackenden Produkt für angemessen erachtet wird. In diesem Falle würde die Siegel-Linie durch den Spalt verlaufen und die Reißverschlußstreifen würden in irgendei ner Weise kurz vor der Linie enden. Es ist weiterhin darauf hinzuweisen, daß die Erfindung in gleicher Weise bei der Herstellung von wiederverschließbaren Kunststoffbeuteln anwendbar ist, bei welchen die Siegel-Linien drei geschlossene Kanten des Beutels und die zeitweilig versiegelte, jedoch zu öffnende und wieder zu verschließende Kante des Beutels bilden. Wo erforderlich, soll der Begriff Bereich so ausgelegt werden, daß er eine Linie umfaßt, da auch eine Linie in diesem Zusammenhang einen begrenzten, wenn auch schmalen Bereich umfaßt.

**Ansprüche**

1. Wiederverschließbare Verpackung mit einem oberen und einem unteren Flächenteil (2,4), welche zwischen sich einen ein Produkt enthaltenden Bereich ausbilden, wobei die Flächenteile (2,4) durchgehend entlang des Umfangs des das Produkt enthaltenden Bereichs durch eine Umfangsdichtung (6) verschweißt sind und wobei ein wiederverschließbares, reißverschlußartiges Material (9) entlang einer Kante des das Produkt enthaltenden Bereiches angeordnet ist, wobei das reißverschlußartige Material (9) miteinander in Eingriff bringbare Leisten umfaßt, die eine zu öffnende und wiederverschließbare Dichtung bilden, dadurch gekennzeichnet, daß das reißverschlußartige Material (9) kurz vor den Enden der Kante endet, wobei die Leisten vollständig innerhalb des äußeren Umfangs des Dichtungsbereichs (6) angeordnet sind.

2. Verpackung nach Anspruch 1, dadurch gekennzeichnet, daß, die Verpackung in Form einer Vakuumverpackung ausgebildet ist.

3. Verpackung nach Anspruch 1 oder 2, dadurch gekennzeichnet, daß die reißverschlußartigen Materialleisten teilweise in dem Dichtungsbereich (6) enden.

4. Wiederverschließbare Verpackung mit einem versiegelten Beutel, welcher längs einer Kante geöffnet werden kann und einen wiederverschließbaren reißverschlußartigen Verschluß aufweist, wobei der reißverschlußartige Verschluß miteinander in Eingriff bringbare Leisten aufweist, welche eine zu öffnende und wiederverschließbare Dichtung bewirken, wobei weiterhin der reißverschlußar tige Verschluß benachbart zu der zu öffnenden Kante angeordnet ist, dadurch gekennzeichnet, daß die miteinander in Eingriff bringbaren Leisten vollständig innerhalb des Beutels und innerhalb der zu öffnenden Kante angeordnet sind.

5. Verpackung nach Anspruch 4, dadurch gekennzeichnet, daß die Verpackung in Form einer Vakuumverpackung ausgebildet ist.

6. Verfahren zur Herstellung einer wiederverschließbaren Verpackung aus Flächenteilen (2,4) aus einem Kunststoffmaterial unter Verwendung eines wiederverschließbaren reißverschlußartigen Materials (9), gekennzeichnet durch die folgenden Arbeitsschritte:

a) Ausbilden einer seitlichen Schleife in einem der beiden Flächenteile (4),

b) Anordnen des reißverschlußartigen Materials (9) längs des ersten Flächenteils (4) unter Kreuzung der Schleife im wesentlichen in einem rechten Winkel,

c) Schneiden des reißverschlußartigen Materials (9) in dem Bereich der Schleife,

d) Geraderichten des ersten Flächenteils (4) zur Bildung eines Spaltes zwischen den abgeschnittenen Enden des reißverschlußartigen Materials (9),

e) Verbinden des zweiten Flächenteils (2) mit dem ersten Flächenteil (4) zur Ausbildung einer Verpackung mit einem Dichtungsbereich (6) in dem Spalt.

7. Verfahren nach Anspruch 7, dadurch gekennzeichnet, daß der Dichtungsbereich in dem Spalt die abgeschnittenen Enden der Streifen des reißverschlußartigen Materials (9) geringfügig überlappt und einschließt.

8. Verfahren zur Herstellung einer wiederverschließbaren Verpackung mit oberen und unteren Flächenteilen (2,4), welche zwischen sich einen ein Produkt aufnehmenden Bereich bilden, wobei die Flächenteile (2,4) nicht unterbrochen um den Umfang des das Produkt aufnehmenden Bereiches miteinander durch einen Dichtungsbereich (6) versiegelt sind, und wobei ein wiederverschließbarer, reißverschlußartiger Verschluß entlang einer Kante des das Produkt aufnehmenden Bereiches angeordnet ist und wobei der reißverschlußartige Verschluß miteinander in Eingriff bringbare Streifen (8) umfaßt, welche eine zu öffnende und wiederschließbare Dichtung bewirken, dadurch gekennzeichnet, daß die miteinander in Eingriff bringbaren Streifen (8) vollständig innerhalb des äusseren Umfangs des Dichtungsbereichs (6) angeordnet sind, wobei die Verpackung durch Ausbilden einer seitlichen Schleife in einem der Flächenteile (4), durch Anordnen eines wiederverschließbaren, reißverschlußartigen Verschlußmaterials (9) längs des Flächenteils (4) unter Kreuzung der Schleife in einem im wesentlichen rechtwinkligen Winkel und durch Schneiden des wiederverschließbaren Verschlußmaterials (9) in dem Bereich der Schleife zur Erzeugung eines Spaltes in dem reißverschlußartigen Material (9), wobei in den Spalt ein Dichtungsbereich (6) ausbildbar ist, hergestellt ist.

9. Vorrichtung zur Herstellung einer wiederverschließbaren Verpackung mit oberen und unteren Flächenteilen (2,4), welche einen ein Produkt aufnehmenden Bereich zwischen sich ausbilden, wobei die Flächenteile (2,4) nicht unterbrochen am Umfang des das Produkt aufnehmenden Bereiches mittels eines Dichtungsbereiches (6) versiegelt sind, und wobei ein wiederverschließbarer, reißverschlußartiger Verschluß längs einer Kante des das Produkt aufnehmenden Bereiches angeordnet ist, wobei der reißverschlußartige Verschluß miteinander in Eingriff bringbare Streifen (8) aufweist, welche eine zu öffnende und wiederverschließbare Dichtung bilden, wobei die mit einander in Eingriff zu bringenden Streifen (8) vollständig innerhalb des äußeren Umfangs des Dichtungsbereiches (6) angeordnet sind, gekennzeichnet durch Mittel zur Ausbildung einer seitlichen Schleife in einem der Flächenteile (4), Mittel zur Positionierung des wiederverschließbaren, reißverschlußartigen Verschlußmaterials (9) längs des Flächenteils (4) unter Kreuzung den Schleife in einem im wesentlichen rechten Winkel und Mittel zum Schneiden des wiederverschließbaren Verschlußmaterials (9) in dem Bereich der Schleife zur Ausbildung eines Spaltes in dem reißverschlußartigen Material (9), wobei in diesem Spalt ein Dichtungsbereich (6) ausbildbar ist.

10. Vorrichtung nach Anspruch 9, dadurch gekennzeichnet, daß die Mittel zur Ausbildung der seitlichen Schleife zumindest einen quer ausgerichteten Schleifen-Formbalken (40) umfassen, welcher in eine oder mehrere bzw. aus der einen oder mehreren korrespondierenden Schleifenbildungsnuten (46) in einem Tisch (48) bewegbar ist, längs dessen das Flächenteil (4) gefördert wird.

11. Vorrichtung nach Anspruch 9 oder 10, gekennzeichnet durch mehrere quer ausgerichtete Schleifen-Formbalken (40) und korrespondierende Schleifen-Formnuten (46) und Mittel zur Betätigung der Schleifen-Formbalken (40) in zeitlicher Abfolge zur Ausbildung der seitlichen Schleifen in zeitlicher Abfolge, wobei das Flächenteilmaterial zur Ausbildung der Schleifen (13) ohne ungewünschtes Dehnen gezogen werden kann.

12. Vorrichtung nach einem der Ansprüche 9 - 11, gekennzeichnet durch einen Tisch (48), längs dessen das Flächenteilmaterial förderbar ist, seitliche Schleifen-Ausbildungsnuten (13) in dem Tisch (48), in welche das Flächenteilmaterial zur Ausbildung seitlicher Schleifen (13) einbringbar ist, einen sich in Längsrichtung erstreckenden Führungsschuh (34) auf welchem und entlang welchem das reißverschlußartige Material (9) vorwärtsbewegbar ist, welcher geringfügig oberhalb des Tisches (48) angeordnet ist und durch zumindest einen beheizbaren Verbindungsbalken (50), welcher unterhalb des Tisches (48) fluchtend zu dem Führungsschuh (34) und durch Schlitze in den Tisch (48) bewegbar angeordnet ist, um das Flächenteilmaterial mit dem reißverschlußartigen Material (9) zwischen dem Verbindungsbalken (50) und der Unterseite des Führungsschuhs (34) zu verbinden.

13. Vorrichtung nach einem der Ansprüche 9 - 12, gekennzeichnet durch zumindest ein Schneidmesser (60) oberhalb des Tisches (48), welches teilweise in die Schleifen-Ausbildungsnut (13) unterhalb des Führungsschuhs (34) zum Schneiden des reißverschlußartigen Materials (9) ohne eine Durchtrennung des Flächenteilmaterials bewegbar ist, wobei der Führungsschuh (34) mit einem Spalt versehen ist, durch welchen das Messer (60) bewegbar ist.

14. Vorrichtung nach einem der Ansprüche 9 - 13, gekennzeichnet durch Klemmbalken (76), welche bewegbar sind, um das reißverschlußartige Material (9) über die Schleife (13) zu klemmen.

15. Vorrichtung nach einem der Ansprüche 9 - 14, gekennzeichnet durch Siegelmittel zum Anheften eines Bereiches des reißverschlußartigen Materials (9) auf dem Flächenteil (4).

16. Vorrichtung nach einem der Ansprüche 9 - 14, dadurch gekennzeichnet, daß die Schleifen-Formbalken (40), die Klemmbalken (76) und das Schneidmesser (60) in einer einzigen Anordnung gelagert sind, so daß eine Betätigung dieser Anordnung in Richtung auf das Flächenteil (4) das reißverschlußartige Material (9) zuerst die Schleife (13) ausbildet, daraufhin das reißverschlußartige Material (9) mit dem Flächenteil (4) verklemmt und daraufhin das reißverschlußartige Material (9) schneidet.

17. Vorrichtung nach einem der Ansprüche 9 - 16, gekennzeichnet durch eine Mehrzahl von in Längsrichtung beabstandeten Schleifen-Formstationen, wobei der Abstand zwischen den Stationen veränderbar ist.

18. Vorrichtung nach Anspruch 17, dadurch gekennzeichnet, daß jede Station an einem oberen horizontalen Rahmenelement (84) aufgehängt ist, welches an in Längsrichtung angeordneten Führungsstäben gelagert ist und daß der Abstand zwischen den Stationen durch Einführen von unterschiedlichen Längen von Abstandshülsen (99) über die Führungsstäbe und zwischen die horizontalen oberen Rahmenelemente (84) veränderbar ist.

19. Vorrichtung zur Herstellung einer wiederverschließbaren Verpackung aus Kunststoff-Flächenteilen (2,4) unter Verwendung eines wiederverschließbaren, reißverschlußartigen Materials (9), gekennzeichnet durch

a) Mittel zur Ausbildung einer seitlichen Schleife (13) in einem ersten der Flächenteile (4),

b) Mittel zur Positionierung des reißverschlußartigen Materials (9) längs des ersten Flächenteiles (4) unter Kreuzung der Schleife (13) in einem im wesentlichen rechten Winkel,

c) Mittel zum Schneiden des reißverschlußartigen Materials (9) in dem Bereich der Schleife (13),

d) Mittel zur Geraderichtung des ersten Flächenteiles (4) unter Erzeugung eines Spaltes zwischen den abgeschnittenen Enden des reißverschlußartigen Materials (9),

e) Mittel zur Verbindung des zweiten Flächenteiles (2) mit dem ersten Flächenteil (4) zur Ausbildung einer Verpackung mit einem Siegelbereich (6) in dem Spalt.

20. Vorrichtung nach Anspruch 19, dadurch gekennzeichnet, daß der Siegelbereich (6) den Spalt geringfügig überlappt und die abgeschnittenen Enden der Streifen des Reißverschlußmaterials (9) umschließt.

$$\underline{\text{Fig. 1}}$$

30) 2 3 26) 24) Formstation 4 20
Dichtstation :Reißverschluß-Schneid- und
28 9 Verbindungs-
114 5 station

10

(a)

FIG. 2

(b)

30  28  26  24  20

EP 0 379 927 A2

FIG. 3

EP 0 379 927 A2

FIG. 4(a)

1. Stufe

EP 0 379 927 A2

40

13

2. Stufe

FIG. 4(b)

EP 0 379 927 A2

3. Stufe

FIG. 4(c)

4. Stufe

FIG. 4(d)

9,4

9
4

54

50

50

50

5. Stufe

FIG. 4(e)

FIG. 4(f)

6. Stufe

EP 0 379 927 A2

vordere Station

mittlere Station

hintere Station

FIG. 5(a)

1. Stufe

FIG. 5(b)

2. Stufe

40

13

FIG. 5(c)

3. Stufe

4. Stufe

FIG.5(d)

FIG. 5(e)

5. Stufe

FIG. 5(f)

6. Stufe

Dichtungsrahmen / oberer Film

Reißverschlußfilm

unterer Film

Dichtungsform

FIG.6

EP 0 379 927 A2

FIG. 7(a)

Stufe 1

neutrale Position

**FIG. 7(b)**

Stufe 2

Herabfalten des Bodenmaterials

76

FIG. 7(c)

Stufe 3

Niederklemmen des Reißverschlusses
und des Bodenmaterials

FIG. 7(d)

Stufe 4

Schneiden des Reißverschlusses

FIG. 7(e)

letzte Stufe

Haft-Dichten des Bodenmaterials
und des Reißverschlusses (Reißverschluß innenliegend)

FIG. 8(a)

Stufe 1

neutrale Position

EP 0 379 927 A2

FIG. 8(b)

Stufe 2

Herabfalten des Bodenmaterials

FIG. 8(c)

Stufe 3

Niederklemmen des Reißverschlusses
und des Bodenmaterials

90

92

76

92

75

60

78

FIG. 8(d)

Stufe 4

Schneiden des Reißverschlusses

EP 0 379 927 A2

Bodenmaterial

78

79

FIG. 8(e)

letzte Stufe

Haft-Dichten des Bodenmaterials
und des Reißverschlusses
(Reißverschluß innenliegend)

FIG. 9

CUTTING LINE

CUTTING LINE

CUTTING LINE

CUTTING LINE

7

101

1

7

1

Verpackungsdichtung

(2. Verschlußstation)

FIG. 10

EP 0 379 927 A2

Tiefziehdeckel

106

DEEP DRAW LID

Reißverschluß

4

unterer
Materialfilm

24

22

103

107

22

Tiefziehform

105

106

8

112

11

12

112

8

4

103

107

105

FIG. 11

EP 0 379 927 A2